# EUROPÄISCHE PATENTANMELDUNG

(11) **EP 4 148 213 A1**
(43) Veröffentlichungstag der Anmeldung: **15.03.2023**
(21) Anmeldenummer: 22190675.3
(22) Anmeldetag: 17.08.2022
(51) Int. Cl.: E05B 47/02, E05B 47/06, E05B 47/00, B64C 1/14, B64D 11/02

(54) **FLUGZEUG-TÜRSCHLOSS MIT ANTRIEB**

(30) Priorität: 10.09.2021 DE 102021123495
(71) Anmelder: Diehl Aviation Laupheim GmbH, 88471 Laupheim (DE); Diehl Aviation Gilching GmbH, 82205 Gilching (DE)
(72) Erfinder: Müller, Björn, 22391 Hamburg (DE); Zager-Rode, Florian, 21614 Buxtehude (DE); Schumann, Oliver, 82205 Gilching (DE)
(74) Vertreter: Diehl Patentabteilung

(57) **Zusammenfassung**

Ein Schlossmodul (18) für eine Tür (8) für einen Raum (2) eines Flugzeugs, enthält ein Schloss (24) mit Sperrelement (36) und nicht-selbsthemmendem Antrieb (40) um das Sperrelement (36) zu bewegen, mit mindestens einem Sperrsensor (64) zur Erfassung der Sperr- (PL) und Freigabelage (FL) des Sperrelements (36) in Form mindestens eines Sperrsignals (66), und mit einer Steuereinheit (68), die signaltechnisch mit den Sperrsensoren (64) und dem Antrieb (40) verbunden ist und die dazu eingerichtet ist den Antrieb (40) zumindest auf Basis der Sperrsignale (66) der Sperrsensoren(64) anzusteuern, und zumindest einen Modulabschnitt (20) des Türblatts, in dem wenigstens das Schloss (24), der Antrieb (40) und der Sperrsensor (64) baulich integriert sind.

Eine Tür (8) für den Raum (2) enthält das Schlossmodul (18) und das Türblatt (12) der Tür (8) enthält den Modulabschnitt (20).

Ein Raum (2) eines Flugzeuges, mit einer einen Innenraum (6) des Raumes (2) umgrenzenden Wandung, enthält die Tür (8).

## Beschreibung

Die Erfindung betrifft derartige Türen für Räume in Flugzeugen, die verschließbar und verriegelbar sind. Entsprechende Räume mit entsprechenden Türen sind insbesondere Bordtoiletten oder Waschräume, auch Lavatory genannt, aber auch Dusch-, Wasch- und Baderäume oder sonstige Räume oder Monumente in Flugzeugen, die eine verschließbare und verriegelbare Tür aufweisen.

Aus der DE 10 2018 113 132 A1 ist eine Türanlage mit einer Falttür bekannt. Die zweiflügelige Toilettentür ist mittels einer ersten und einer zweiten Türtafel als faltbare Toilettentür ausgebildet, wobei die Türtafeln über Scharniere miteinander verbunden sind. Die Toilettentür weist an der ersten Türtafel einen Stift auf, über die die Falttür schwenkbar befestigt ist. Um die Falttür öffnen und schließen zu können, weist die zweite Türtafel der Falttür eine Führungsvorrichtung auf, welche entlang dem Türöffnungsbereich bewegt wird. Die Bewegung der Toilettentür zwischen Schließ- und Offenstellung, sowie das Ver- und Entriegeln erfolgt über eine elektromotorische Stellvorrichtung. Hierzu wirkt ein von einem Elektromotor betriebener Linearaktuator über einen mit dem Linearaktuator gekoppelten Schlitten auf die erste Türtafel der Falttür. Als weitere Komponente der Betätigungsvorrichtung ist weiter eine in den Türrahmen integrierte Bedieneinheit vorgesehen. Die Bedieneinheit weist jeweils eine auf der Toiletteninnen- und Toilettenaussenseite bedienbare Sensoreinheit mit jeweils zwei oberflächenbündig in den Türrahmen integrierten Infrarot-Sensoren auf.

Aus der Praxis ist es alternativ auch bekannt, auf der Toiletteninnenseite zwei, auf der Toilettenaußenseite eine Sensoreinheit oberflächenbündig in den Türrahmen zu integrieren. Es können sowohl Infrarot-, als auch kapazitive Sensoren verwendet werden.

Aufgabe der vorliegenden Erfindung ist es, Verbesserungen in Bezug auf die oben genannten Türen für Räume in Flugzeugen vorzuschlagen.

Die Aufgabe der Erfindung wird gelöst durch ein Schlossmodul gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Schlossmodul ist dazu eingerichtet, in eine bestimmungsgemäße Tür für einen Raum eines Flugzeugs eingebaut bzw. angebaut zu werden. Die Erfindung geht dabei davon aus, dass die bestimmungsgemäße Tür einen Türrahmen und ein Türblatt aufweist. Das Türblatt ist dabei zwischen einer den Türrahmen freigebenden Offenstellung und einer den Türrahmen verschließenden Schließstellung bewegbar. Die Offenstellung dient dazu, dass Personen den Raum betreten und verlassen können, die Tür bzw. der Raum also offen steht. Die Schließstellung dient dazu, den Raum mithilfe der geschlossenen Tür zu verschließen. Der Begriff "Türrahmen" ist hier breit bzw. funktional zu verstehen und bezeichnet jedwede Struktur, welche eine durch das Türblatt zu verschließende Türöffnung umgibt. Der Türrahmen kann daher ein gegenständliches Teil sein, welches tatsächlich genau zu diesem Zweck in eine Wandung des Raumes eingesetzt ist, um das Türblatt zu fixieren, zu führen usw. Der Türrahmen kann aber beispielsweise auch durch einen gedachten Teilabschnitt der Wandung des Raumes gebildet sein und somit streng genommen selbst kein diskretes Strukturteil darstellen, welches eigens für diesen Zweck geschaffen wäre.

Das Schlossmodul enthält ein Schloss. Das Schloss als Ganzes ist in seiner Funktionalität für das Schließen und Verriegeln der Tür zuständig.

Das Schloss enthält ein mechanisches Schließelement. Das Schließelement ist - relativ zum Türblatt bzw. dessen Modulabschnitt, siehe unten - bewegbar bzw. ortsveränderlich und in diesem Sinne in eine Schließlage bringbar. Wenn sich das Schließelement in der Schließlage befindet, ist das Türblatt in der Schließstellung gehalten. Unter letzterem ist zu verstehen, dass die Tür bzw. das Türblatt im Türrahmen geschlossen gehalten, also zumindest nicht geöffnet werden kann. Ein mechanisches, z.B. formschlüssiges Halten, z.B. am Türrahmen, ist dafür nicht zwingend erforderlich. Das Schließelement ist durch mechanische bzw. ortsveränderliche tatsächliche Bewegung relativ zum Türblatt auch in eine von der Schließlage verschiedene Offenlage bringbar. In dieser Offenlage ist das Türblatt aus der Schließstellung bringbar. Die Tür kann also geöffnet werden, das Türblatt aus dem Türrahmen bewegt werden. Insbesondere kann das Türblatt so bis in die Offenstellung gebracht werden. Das Schließelement ist insbesondere in Form eines linear, insbesondere entlang dessen Längserstreckungsachse verschiebbaren Riegels ausgeführt. Das Schließelement ist insbesondere realisiert durch eine Schlosszunge am Türblatt einer Einflügeltür, die in der Schließlage in eine Schlossaufnahme im Türrahmen eingreift. Bei einer Falttür ist das Schließelement insbesondere an einem der Teilblätter gehalten und fährt zum Schließen in eine Schlossaufnahme am benachbarten Türblatt ein.

Das Schloss enthält ein Sperrelement, insbesondere in Form eines linear, insbesondere entlang dessen Längserstreckungsachse verschiebbaren Riegels. Das Sperrelement ist insbesondere ein mechanisches Sperrelement. Alternativ kann dieses insbesondere aber auch magnetisch oder elektrisch ausgeführt sein. Auch das Sperrelement ist - insbesondere relativ zum Türblatt bzw. Modulabschnitt und/oder relativ zum sich in der Schließlage befindlichen Schließelement - mechanisch bewegbar und in diesem Sinne in eine Sperrlage bringbar. In der Sperrlage ist das Schließelement durch das Sperrelement in der Schließlage gehalten. "In der Schließlage gehalten" kann auch bedeuten, dass die Möglichkeit verhindert ist, das Schließelement aus der Schließlage heraus zu bewegen, zum Beispiel durch Unterbinden / Verhindern einer hierfür vorgesehenen Bewegung einer Türklinke. Ein direkter mechanischer Angriff am Schließelement ist also nicht zwingend erforderlich. Das Sperrelement ist auch in eine von der Sperrlage verschiedene Freigabelage bringbar bzw. mechanisch ortsveränderlich dorthin bewegbar. Befindet sich das Sperrelement in der Freigabelage, ist das Schließelement aus der Schließlage bringbar, kann also insbesondere in die Offenlage gebracht werden.

Das Schloss enthält einen nicht-selbsthemmenden Antrieb, insbesondere einen Linearantrieb. Dieser ist wenigstens mit dem Sperrelement bewegungsgekoppelt. Durch die Bewegungskopplung kann der sich bewegende bzw. arbeitende Antrieb das Sperrelement zwischen der Sperrlage und der Freigabelage bewegen. Hierzu weist der Antrieb insbesondere ein Fixierende und ein Abtriebsende auf. Insbesondere ist das Fixierende am Türblatt bzw. Modulabschnitt starr befestigt, das Abtriebsende ist z.B. eine Spindelmutter eines Linearantriebs in Form eines Spindelantriebs. Das Abtriebsende ist insbesondere starr am Sperrelement befestigt, ist also ein linear mit diesem verschiebbares Element.

Das Schlossmodul enthält mindestens einen Sperrsensor. Dieser ist dazu eingerichtet, zumindest Sperr- und Freigabelage, insbesondere auch mechanische Zwischenpositionen / -lagen des Sperrelements in Form mindestens eines Sperrsignals zu erfassen. Der Sperrsensor ist insbesondere ein Lagesensor für das Sperrelement, der dessen Lage bzw. Position kontinuierlich / an einer Vielzahl diskreter Positionen erfasst. Alternativ sind insbesondere zwei Sperrsensoren in Form von Endlagensensoren / - schaltern vorgesehen, die einerseits die Sperr- und andererseits die Freigabelage in z.B. binärer Art (Lage erreicht: ja/nein) erfassen. Das Sperrsignal ist also insbesondere ein kontinuierliches Lagesignal des Sperrelements oder auch ein binäres ja/nein Signal für die jeweilige Endlage des Sperrelements in der Sperr- oder Freigabelage.

Das Schlossmodul enthält eine Steuereinheit. Diese ist signaltechnisch mit den Sperrsensoren und dem Antrieb verbunden und ist dazu eingerichtet, den Antrieb zumindest auf Basis der Sperrsignale der Sperrsensoren anzusteuern. Ein entsprechender Befehl hierzu kann in beliebiger Art an die Steuereinheit herangetragen werden.

Das Schlossmodul weist zumindest einem Modulabschnitt des Türblatts auf. Der Modulabschnitt ist ein dinglicher Teilbereich des Türblatts, alternativ auch das gesamte Türblatt. In den Modulabschnitt ist wenigstens das Schloss, der Sperrsensor und der Antrieb, optional auch die Steuereinheit, baulich integriert. Mit anderen Worten befinden sich Schloss, Sperrsensor und Antrieb, gegebenenfalls auch die Steuereinheit, baulich integriert im Türblatt.

Aufgrund der Eigenschaft des Antriebs, nicht selbsthemmend ausgeführt zu sein, ist das Sperrelement auch jederzeit manuell bedienbar, indem durch händische Bewegung des Sperrelements dieses und der Antrieb gleich mit verstellt wird. Der Antrieb dient zur Unterstützung bzw. zur Realisierung einer optionalen motorischen Bewegung des Sperrelements. So kann insbesondere eine berührungslose Funktionalität des Sperrelements realisiert werden, indem der Antrieb mittels der Steuereinheit auf ein Signal eines berührungslosen Sensors hin angesteuert wird. Das Schlossmodul ist insbesondere so ausgeführt, dass eine Verriegelung des Schlosses (Sperrelement in der Sperrlage) nur vom Inneren des Raumes aus, insbesondere nur bei Türblatt in der Schließstellung, möglich ist. Dennoch kann eine Notentriegelung von außerhalb des Raumes möglich sein, z.B. durch eine entsprechende Ansteuerung der Steuereinheit oder auch eine verdeckte bzw. versteckte manuelle Schnittstelle des Sperrelements, die von außerhalb des Raumes zugänglich ist, zum Beispiel für Bordpersonal des Flugzeugs. Insbesondere ist an der Tür ein Kabelübergang / -zuführung zwischen Türrahmen / umgebender Wandung und Türblatt vorgesehen. Insbesondere ist ein derartiger Übergang dort vorgesehen, wo das Türblatt drehbar am Türrahmen gelagert ist.

Eine vergleichbare mechanische Schnittstelle wie am Sperrelement kann alternativ oder zusätzlich auch am Schließelement vorgesehen sein, um auch dieses jederzeit manuell zwischen Schließlage und Offenlage bewegen zu können. Eine derartige Schnittstelle ist in der Regel sowohl von innerhalb als auch von außerhalb des Raumes zugänglich, da die Tür von beiden Seiten geöffnet und geschlossen werden soll. Allerdings ist ein Öffnen von außerhalb des Raumes dann unterbunden, wenn sich das Sperrelement in der Sperrlage befindet. Ein motorischer Antrieb des Schließelements durch den Antrieb ist jedoch optional auch möglich. So kann eine weitere Automatisierung der Tür erreicht werden.

Gemäß der Erfindung ergibt sich damit ein elektromechanischer Verriegelungsmechanismus. Der elektromechanische Verriegelungsmechanismus automatisiert ein mechanisches Türschloss. Ein grundlegendes Schlosskonzept kann somit grundsätzlich beibehalten werden, und lediglich durch einen nicht-selbsthemmenden Linearaktuator, zum Beispiel einen Linear-Stepper-Motor, ergänzt werden. Sowohl die genannten, als auch weitere, möglichst alle elektronischen Bauteile (siehe unten) werden soweit möglich im Türblatt / Modulabschnitt angeordnet. So kann der Integrationsbedarf für verschiedene Räume, die mit einem solchen Türblatt ausgerüstet werden sollen, kleinstmöglich gestaltet werden.

Gemäß der Erfindung kann insbesondere eine berührungslose Tür bzw. ein berührungsloses Türschloss realisiert werden, insbesondere eine berührungslose Lavatory.

In einer bevorzugten Ausführungsform weist das Schlossmodul ferner eine Türklinke, vorzugsweise am Türblatt auf. Die Türklinke ist mit dem Schließelement bewegungsgekoppelt, insbesondere mechanisch gekoppelt: Grundsätzlich befindet sich die Türklinke in einer Ruhestellung. In dieser wird durch die Türklinke keine Kraft auf das Schließelement ausgeübt. Insbesondere durch eine händische Bedienung eines Nutzers kann die Türklinke gedrückt werden, indem diese um eine Drehachse verdreht wird. Die Türklinke ist damit in eine Betätigungsstellung bringbar/gebracht worden. Durch die Bewegungskopplung von Türklinke und Schließelement und entsprechender Betätigung der Türklinke wird das Schließelement aus der Schließlage in die Offenlage gezogen. Somit befindet sich das Schließelement in der Offenlage, wenn die Türklinke in der Betätigungsstellung ist. Das Türblatt wird also freigegeben und kann aus der Schließstellung in die Offenstellung bewegt werden. Beim Loslassen der Türklinke kehrt diese aus der Betätigungsstellung in ihre Ruhestellung zurück. Das Schließelement kehrt daraufhin beispielsweise federgestützt in die Schließlage zurück. Auch beim Schließen der Tür kann das Schließelement aufgrund beispielsweise einer Anlaufschräge und dem entsprechenden Anlauf am Türrahmen bzw. der Schlossaufnahme selbsttätig zurückgedrückt werden. Sobald die Tür "ins Schloss gefallen ist", kehrt das Schließelement in seine Schließlage zurück; die Tür ist sodann wieder in der Schließstellung gehalten.

Die Türklinke weist eine Aufnahme auf, in der das Sperrelement einlegbar ist und in der Sperrlage einliegt. Diese Position des Sperrelements entspricht einer ersten Endstellung des Sperrelements. Diese Position kann dadurch erreicht werden, dass beispielsweise das Sperrelement an einem Anschlag der Aufnahme der Türklinke anliegt. Durch das Einliegen bzw. einen entsprechenden formschlüssigen Eingriff in die Aufnahme und damit der Türklinke ist eine Drehung der Türklinke um die Drehachse und damit der Betätigung verhindert bzw. unterbunden. Dadurch, dass die Türklinke nicht betätigt werden kann, ist verhindert, dass das Schließelement mit deren Hilfe aus der Schließlage heraus bewegt werden kann. Somit ist auch verhindert, dass das Türblatt auf dieser Weise aus der Schließstellung bewegt werden kann.

Durch Bewegen des Sperrelements in die Freigabelage verlässt das Sperrelement die Aufnahme. Eine Drehbewegung der Türklinke um die Drehachse ist möglich und somit das Herausbewegen des Schließelements aus der Schlossaufnahme sowie das Öffnen der Tür.

In dieser Ausführungsform ist der nicht-selbsthemmenden Antrieb sowohl mit dem Sperrelement als auch mit dem Schließelement bewegungsgekoppelt Durch Betätigung des Antriebs kann sowohl das Schließelement zwischen der Sperrlage und der Freigabelage motorisch hin und her bewegt werden. Außerdem kann das Schließelement aus der Schließlage in die Offenlage bewegt werden und auch aus der Offenlage freigegeben werden, sodass das Schließelement eigenständig, nämlich durch seine oben genannte Federeigenschaft, wieder in die Schließlage zurückkehren kann bzw. zurückkehrt.

Die Bewegungskopplung zwischen Antrieb und Sperrelement ist wie folgt realisiert: Der Antrieb weist ein Fixierende und ein Abtriebsende auf. Das Fixierende ist fest im Türblatt verankert. Weiterhin ist eine relativ zum Fixierende rotierbare Spindel mit Spindelmutter vorgesehen, so dass die Spindelmutter das relativ zum Türblatt bewegbare Abtriebsende bildet. Die Spindelmutter wiederum ist fest mit dem Sperrelement verbunden. Eine Drehung der Spindel führt somit stets zu einer Zwangsbewegung des Abtriebsendes und damit des Sperrelements relativ zum Türblatt.

Zwischen der oben beschriebenen ersten Endstellung und der weiter unten beschriebenen zweiten Endstellung ist das Sperrelement innerhalb des bzw. relativ zum Schließelement frei beweglich, sodass dieses in die Aufnahme ein- oder aus dieser ausfahren kann. Somit erfolgt bei einer Bewegung des Sperrelements zwischen diesen beiden Endstellungen keine Kraftübertragung von dem Sperrelement auf das Schließelement. Wird jedoch die Spindelmutter und damit das Sperrelement weiterbewegt, hintergreift ein Mitnahmeelement am Sperrelement ein Gegenelement am Schließelement und zieht dieses nun mit sich. Die Position, in der das Mitnahmeelement am Sperrelement das Gegenelement am Schließelement hintergreift, ist die zweite Endstellung des Sperrelements. Bei weiterer Bewegung des Sperrelements erfolgt eine Kraftübertragung auf das Schließelement, so dass das Schließelement aus der Schließlage gezogen wird, bis es schließlich die Schlossaufnahme verlassen hat und das Türblatt freigegeben ist, um aus der Schließstellung bewegt zu werden. Eine Betätigung der Türklinke ist hierbei nicht notwendig. Sowohl das Ver- und Entriegeln der Tür als auch das Freigeben des Türblatts erfolgt also motorisch durch Betätigung des Antriebs.

Das Sperrelement kann außerdem ein zusätzliches manuelles Bedienelement, beispielsweise in Form eines Bedienknaufs, aufweisen. Ein Nutzer kann händisch am Bedienelement angreifen, um das Sperrelement zu bewegen und so die Tür manuell zu Ver- oder entriegeln. Das Bedienelement kann zwei verschiedene Ortspositionen einnehmen, anhand derer ein Nutzer auch erkennen kann, ob die Tür verriegelt oder entriegelt ist. In einer ersten Variante A weist das Bedienelement einen Freilauf bezüglich des Sperrelements auf. Wird das Sperrelement daher motorisch durch den Antrieb weiter verschoben, folgt das Bedienelement dieser Bewegung nicht und zeigt einem Benutzer weiterhin dieselbe Ortsposition "entriegelt" an. In einer zweiten Variante B hingegen ist das Bedienelement fest mit dem Sperrelement verbunden und folgt somit auch der entsprechenden Bewegung des Sperrelements durch eine weitere Verschiebung.

In einer bevorzugten Ausführungsform weist das Türblatt mindestens zwei, insbesondere genau zwei, Teilblätter auf. Die Teilblätter sind über ein jeweiliges Mittelscharnier gelenkig miteinander verbunden. Das Schließelement ist dazu eingerichtet, in der Schließlage die, insbesondere jeweils zwei der, Teilblätter mechanisch und unbeweglich gegeneinander zu fixieren, so dass eine Bewegung am Mittelscharnier unterbunden ist. Das Schließelement ist damit dazu eingerichtet, das Türblatt in der Schließstellung zu halten, also ein Verbringen in die Offenstellung zu unterbinden. Der Modulabschnitt ist dabei insbesondere an genau einem der Teilblätter angeordnet. Insbesondere handelt es sich dabei um das "innere" Teilblatt, nämlich das am Türrahmen drehbar gelagerte Teilblatt, insbesondere im Fall eines genau zweiflügeligen Falt-Türblatts. Die elektrische Zuführung (Kabelübergang) ist dadurch besonders einfach, da sie vom Türrahmen aus nur über ein Gelenk zum inneren Teilblatt geführt werden muss. Das Schließelement, zum Beispiel in Form eines Sperrriegels / Verriegelungsbolzens ist dann ebenfalls am betreffenden Teilblatt beweglich fixiert bzw. gelagert und fährt in der Schließlage in eine Schlossaufnahme im oder am benachbarten bzw. anderen Teilblatt ein. Eine mechanische Verriegelung der Tür ist somit nur am Mittelscharnier notwendig, eine Verriegelung des Türblatts / Teilblatts am Türrahmen mithilfe eines zusätzlichen Riegelelements zwischen einem der Teilblätter und dem Türrahmen, um das Türblatt der Schließstellung zu halten, ist nicht nötig und insbesondere auch tatsächlich unterlassen.

In einer bevorzugten Variante dieser Ausführungsform enthält daher das Schlossmodul kein zwischen wenigsten einem der Teilblätter und dem Türrahmen wirkendes Riegelelement, das dazu eingerichtet wäre, das Türblatt am Türrahmen in der Schließstellung zu halten.

In einer bevorzugten Ausführungsform sind das Schließelement und das Sperrelement identisch. Beide Elemente fallen also zusammen; es handelt sich um ein einziges Element mit Doppelfunktionalität. Die Sperrlage entspricht damit der Schließlage, die Freigabelage der Offenlage.

Das Schlossmodul enthält also insbesondere nur einen einzigen Sperrriegel / Verriegelungsbolzen, der relativ zum Türblatt bewegbar ist und beide Funktionalitäten (Schloss/Schließelement einerseits und Verriegelung andererseits) erfüllt. Diese Lösung bietet sich insbesondere bei einem mindestens oder genau zweiflügeligen Falt-Türblatt einer Falttür an, da diese ohne jegliche Art von Türgriff / Klinke einfach durch Drücken / Ziehen im Bereich eines bzw. des einzigen Mittelscharniers geöffnet (Offenstellung) und geschlossen (Schließstellung) werden kann und z.B. in beiden Stellungen einrastet. Lediglich eine entsprechende Rastkraft ist zu überwinden, jedoch muss kein mechanisches Schließelement gelöst werden. Gleiches wäre auch für eine Drehtür denkbar, wenn diese in der Schließstellung "einrastet", z.B. mithilfe eines entsprechenden Zuhalteelements. Ein derartiges Zuhalteelement ist insbesondere nach Art eines Kugelschnäppers aufgebaut.

In einer bevorzugten Ausführungsform ist das Türblatt ein Einzelblatt. Das Schließelement ist in diesem Fall dazu eingerichtet, in der Schließlage das Einzelblatt in der Schließstellung gegenüber dem Türrahmen zu fixieren, so dass eine Bewegung des Türblatts aus der Schließstellung heraus relativ zum Türrahmen unterbunden ist. Die Tür ist in diesem Fall eine Einflügeltür, die insbesondere mit Drehscharnier drehbar am Türrahmen angeschlagen ist. Das Schloss bzw. Schließelement ist am Einzelblatt gehalten, insbesondere ist ein Sperrriegel / Verriegelungsbolzen verschiebbarer am Einzelblatt gelagert und fährt in der Sperrlage in eine Schlossaufnahme am Türrahmen ein.

In einer bevorzugten Ausführungsform enthält das Schlossmodul mindestens einen Externsensor zur Erkennung eines Türzustandes. Der Externsensor ist dazu eingerichtet, einen Türzustand zu erkennen und ein mit dem Türzustand korreliertes Externsignal auszugeben. Insbesondere weist der Externsensor dabei eine flugzeugspezifische Schnittstelle zur Ausgabe des flugzeugspezifischen Externsignals auf, das eine mit dem Türzustand korrelierte Information darstellt bzw. beinhaltet. "Flugzeugspezifisch" ist hier so zu verstehen, dass dieses Signal bestimmten Anforderungen im Flugzeug entsprechen muss und im Flugzeug weiterverarbeitet wird. Insbesondere wird das Signal als solches im Flugzeug zwingend benötigt, um zum Beispiel bereits vorhandene Elemente anzusteuern. Ein Beispiel hierfür ist das "door locked" Signal einer Waschraumtür, um ein "occupied sign" für den Waschraum anzusteuern und die Waschraumbeleuchtung zu steuern. Dieses Signal wird herkömmlicherweise durch einen im Türrahmen eingebauten "door switch" erzeugt.

Der Externsensor ist zwar baulich im Modulabschnitt integriert, jedoch signaltechnisch nicht mit der Steuereinheit verbunden. In Bezug auf die Tür bildet der Externsensor damit ein eigenes bzw. separates System bzw. ist Teil eines eigenen Signalweges, der zumindest im Hinblick auf das Schlossmodul keinerlei signaltechnischen Berührungspunkte mit diesem hat. Der Externsensor bzw. dessen Sensor-Ausgangssignal wird vom Türblatt weg einer anderweitigen Verwendung im Flugzeug zugeführt. Insbesondere dient der Externsensor dazu, einen Türzustand unabhängig vom Schlossmodul zu erfassen und an das Flugzeug zu melden. Türzustand ist insbesondere die mechanische Stellung des Türblatts (Schließstellung/Offenstellung) oder die aktuelle Lage des Schließelement und/oder des Sperrelements. Dabei ist zu betonen, dass es sich dann um eine im Hinblick auf das Türmodul getrennte bzw. redundante Sensorik handelt, die neben bzw. isoliert von z.B. dem Sperrsensor arbeitet. Der Externsensor ist also insbesondere ein eigenständiger Endlagenschalter als Ersatz für einen aus der Praxis bekannten fachüblichen "door switch" in der Wand / im Türrahmen, der bei herkömmlichen Flugzeugtüren das Einliegen eines Sperrriegels im Türrahmen erkennt, woraus z.B. auf die Verriegelung der Tür geschlossen wird. Vorliegend ergibt sich der Vorteil, dass auch dieser Sensor im Türblatt integriert ist und somit eine Sensorik außerhalb des Türblatts nicht notwendig ist, was einen erhöhten Integrationslevel und damit eine Systemvereinfachung bedeutet.

In einer bevorzugten Ausführungsform enthält das Schlossmodul mindestens einen mit der Steuereinheit signaltechnisch verbundenen Befehlssensor. Dieser ist eingerichtet zur Erfassung eines mit dem Schlossmodul korrelierten Türbefehls. Der Befehlssensor ist baulich in den Modulabschnitt integriert. Ein Türbefehl ist jeder an die Tür bzw. deren Funktionalität gerichteter Türbefehl, insbesondere ein Bewegungsbefehl, um das Türblatt motorisch zu bewegen, insbesondere zwischen Offenstellung und Schließstellung zu wechseln. Ein weiterer Türbefehl ist insbesondere ein solcher, der sich an das Schließelement und/oder Sperrelement richtet, um diese zu bewegen und so das Schließelement und damit die Tür zum Öffnen freizugeben (Offenlage) oder dies zu verhindern (Schließlage) oder das Sperrelement zu bewegen und somit die Tür bzw. das Schloss zu verriegeln (Sperrlage) oder zu entriegeln (Freigabelage). Insbesondere in Verbindung mit einem motorischen Türantrieb zur Bewegung des Türblatts ergeben sich so weitere Möglichkeiten der Türautomatisierung, insbesondere einer vollständigen berührungslosen Bedienung sämtlicher Funktionalitäten der Tür (Bewegen, Freigeben, Geschlossen halten, Verriegeln, Entriegeln).

Alternativ oder zusätzlich enthält das Schlossmodul außerdem mindestens einen mit der Steuereinheit signaltechnisch verbundenen Zusatzsensor, der ebenfalls in das Schlossmodul baulich integriert ist. Der Zusatzsensor ist dazu eingerichtet, einen bzw. den Türzustand zu erfassen. Entsprechende Türzustände wurden bereits oben im Zusammenhang mit dem Externsensor erläutert. Im Unterschied zu oben wird der Türzustand nunmehr jedoch der Steuereinheit zugeführt und kann dort für die unmittelbare Steuerung des Türmoduls genutzt werden. So können zum Beispiel Fehlbedienungen erfasst und vermieden werden, wie zum Beispiel der Versuch, das Sperrelement in die Sperrlage zu bringen, während sich das Türblatt in der Offenstellung befindet.

In einer bevorzugten Variante dieser Ausführungsform wird davon ausgegangen, dass das Sperrelement - wie oben als optional bereits erwähnt - und/oder das Schließelement ein manuelles Bedienelement zur manuellen Änderung von dessen Lage (Bewegen des Sperrelements zumindest zwischen Sperrlage und Freigabelage) aufweist. Der Befehlssensor ist dann in unmittelbarer Umgebung des Bedienelements angeordnet. "Unmittelbar" heißt, dass ein Benutzer, der das Bedienelement sieht, berühren könnte, praktisch am gleichen Ort auch den Befehlssensor vorfindet, z.B. direkt benachbart, mit nur sehr geringem Abstand (in der Größenordnung der Dimensionen des Bedienelements / Befehlssensors). Für einen Benutzer der Tür kann somit eine besonders intuitive Bedienung des Sperrelements vermittels des - insbesondere berührungslos arbeitenden - Befehlssensors erfolgen. Denn der Bediener wird dazu neigen, dass Sperrelement am Bedienelement händisch bedienen zu wollen und erkennt sofort intuitiv die unmittelbar am praktisch gleichen Bedienort verfügbare Möglichkeit zur ersatzweisen (berührungslosen) Bedienung des Sperrelements über den Befehlssensor. Ihm ist damit eine alternative Bedienmöglichkeit der Tür geboten. So lässt er anzunehmenderweise das manuelle Bedienen des Bedienelements außer Acht und nutzt den Befehlssensor.

In einer bevorzugten Ausführungsform enthält das Schlossmodul mindestens ein Anzeigeelement. Dieses ist eingerichtet zur Anzeige einer mit dem Schlossmodul korrelierten Zustandsinformation. Das Anzeigeelement ist baulich ebenfalls in den Modulabschnitt integriert und mit der Steuereinheit signaltechnisch verbunden. Die Zustandsinformation ist insbesondere die aktuelle Lage des Sperrelements und/oder des Schließelements. Das Anzeigeelement ist insbesondere - falls vorhanden - in den Befehlssensor integriert; insbesondere ist damit ein berührungsloser Befehlssensor mit integriertem Anzeigeelement ("touchless-sensor with indication") realisiert. Ein derartiges Anzeigeelement erhöht den Bedienungskomfort des Schlossmoduls bzw. der Tür.

In einer bevorzugten Ausführungsform ist der Antrieb auch mit dem Schließelement bewegungsgekoppelt und dazu eingerichtet, um dieses zumindest aus der Schließlage in die Offenlage zu bewegen. Optional ist auch eine angetriebene Gegenbewegung (von der Offenlage zur Schließlage) möglich; alternativ oder zusätzlich kann die Gegenbewegung jedoch auch selbsttätig, insbesondere federgestützt, erfolgen. Diese Lösung kann optional für getrennte Sperrelemente vorgesehen sein; falls die beiden Elemente zusammenfallen (siehe oben) ergibt sich diese Lösung automatisch bzw. implizit. Somit ist auch ein motorisches und insbesondere berührungsloses Bedienen des Schließelements ermöglicht.

In einer bevorzugten Ausführungsform weist die Steuereinheit mindestens eine Emulations-Schnittstelle zum Flugzeug auf. Die Steuereinheit ist außerdem dazu eingerichtet, an dieser Schnittstelle ein flugzeugspezifisches, mit der Tür korreliertes Emulationssignal, insbesondere im Sinne des oben genannten Externsignals, bereitzustellen, das auf Basis der in der Steuereinheit verfügbaren Daten erzeugt ist. Hierdurch bietet sich die Möglichkeit, das oben genannte Externsignal zu emulieren bzw. zu simulieren. Der oben genannte Externsensor ist dann insbesondere nicht mehr nötig und wird durch die Steuereinheit simuliert bzw. dessen Funktionalität dargestellt. Aus Sicht des Flugzeugs ist jedoch weiterhin das vom Flugzeug benötigte Externsignal bereitgestellt, jedoch nicht durch den eigentlich dafür vorgesehenen Externsensor. Das Gesamtsystem wird dadurch weiterhin vereinfacht. Insbesondere lässt sich so der oben genannte "door switch" sozusagen auf sensorlose Weise ersetzen.

Die Aufgabe der Erfindung wird auch gelöst durch eine Tür für einen Raum eines Flugzeugs, wobei die Tür einen Türrahmen und ein Türblatt aufweist, wobei die Tür das erfindungsgemäße Schlossmodul aufweist und das Türblatt den Modulabschnitt enthält.

Raum, Tür, Türrahmen und Türblatt entsprechen also den oben im Zusammenhang mit dem Schlossmodul bereits genannten Gegenständen.

Die Tür und zumindest ein Teil deren möglicher Ausführungsformen sowie die jeweiligen Vorteile wurden sinngemäß bereits im Zusammenhang mit dem erfindungsgemäßen Schlossmodul erläutert.

In einer bevorzugten Ausführungsform enthält die Tür einen Türantrieb. Der Türantrieb ist dazu eingerichtet, das Türblatt zwischen der Offenstellung und der Schließstellung zu bewegen. Ein entsprechender Türantrieb wurde oben bereits erläutert. Somit ergeben sich sämtliche oben bereits erwähnten Möglichkeiten einer insbesondere berührungslosen Türbedienung bzw. -automatisierung.

Die Aufgabe der Erfindung wird auch gelöst durch einen Raum eines Flugzeuges, mit einer einen Innenraum des Raumes umgrenzenden Wandung, wobei die Wandung mindestens eine erfindungsgemäße Tür enthält. Insbesondere kann der Raum bzw. dessen Innenraum durch die geöffnete Tür von Personen betreten oder verlassen werden. Die Tür kann insbesondere verschlossen und verriegelt werden.

Raum, Innenraum, Wandung, Tür usw. entsprechen also den oben im Zusammenhang mit dem Schlossmodul / der Tür bereits genannten Gegenständen.

Der Raum und zumindest ein Teil dessen möglicher Ausführungsformen sowie die jeweiligen Vorteile wurden sinngemäß bereits im Zusammenhang mit dem erfindungsgemäßen Schlossmodul und der erfindungsgemäßen Tür erläutert.

Der Raum ist wie oben bereits angedeutet, insbesondere ein Monument, eine Dusche, ein Bad, eine Toilette, ein abschließbarer Aufenthaltsraum, Abteil oder dergleichen eines Flugzeuges.

In einer bevorzugten Ausführungsform ist der Raum ein Waschraum, auch Bordtoilette oder Lavatory, eines Flugzeuges.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Die vorgeschlagene Lösung ermöglicht eine berührungslose Bedienung eines Türschlosses. Die vorgeschlagene Lösung ermöglicht eine elektromechanische Ver- und Entriegelung (Sperrelement). Im Falle einer Applikation einer Einflügeltür kann zusätzlich die Schlosszunge (Schließelement) eingefahren werden, um eine (ggf. motorische, Türantrieb) Türöffnung zu ermöglichen. Die Ver- und Entriegelung wird durch berührungslose Interaktion mit mindestens einem Näherungssensor (Befehlssensor) ausgelöst. Die Tür kann stets manuell ver- und entriegelt werden (manuelles Bedienelement). Wie heute üblich, kann die Crew die Tür außerhalb des zu verriegelnden Bereichs (als von außerhalb des Raumes aus) ver- und entriegeln.

Der Verriegelungsbolzen (Sperrelement) wird über einen nicht-selbsthemmenden Antrieb bewegt, welcher im Türschloss verbaut ist. Hierfür wird das Türschloss im inneren Türblatt (bei Falttüren / jenes, das am Türrahmen drehbar angeschlagen ist) elektrisch betrieben (Antrieb). Ein Kabelübergang stellt die Stromversorgung und Kommunikation zum Controller (Steuereinheit) und ggf. Flugzeug sicher.

Verschiedene Sensoren erfassen den aktuellen Verriegelungszustand (Sperrsensoren / Zusatzsensoren, z.B. Position der Verriegelungsbolzen), die geschlossene Türposition (Zusatzsensor, damit die Tür nur im geschlossenen Zustand verriegelt wird), und/oder die Verfahrgeschwindigkeit (z.B.: Hallsensor Motor als Sperrsensor und/oder Zusatzsensor). Optional kann ein eigenständiger Endlagenschalter (Externsensor) die locked Position erkennen, um das entsprechende Signal an das Flugzeug zu kommunizieren (wird für Lichtsteuerung und occupied sign in der Kabine genutzt; ersetzt Door Switch in der Wand).

Das Konzept umfasst:
1. Elektromechanischer Verriegelungsmechanismus im inneren Türblatt bestehend aus
   a. Mechanisches Türschloss (Schließelement / Sperrelement: Riegel mit mech. Interface für man. Nutzung)
   b. Nicht-selbsthemmender Antrieb
   c. 2 Endlagenschalter (Sperrsensor: locked & unlocked signal)
   d. Eigenständiger door locked sensor (Externsensor) für Flugzeug (Kabinenmanagementsystem: Beleuchtung & occupied sign)
2. Schlossaufnahme für Riegel im äußeren Türblatt
3. Kabelübergang
4. Door closed sensor (Zusatzsensor, z.B. Reedsensor mit Magnet)
5. Optional: Befehlssensor mit Anzeigeelement: Touchless Switch with Indication im inneren Türblatt.

Die vorgeschlagene Lösung zeichnet sich insbesondere durch folgende Merkmale aus:
1. Die Bedienung erfolgt optional berührungslos (Befehlssensor) und steigert die Hygienebedingungen in der Flugzeugkabine.
2. Das System erfüllt flugzeugspezifische Sicherheitsstandards. Das Türschloss kann immer manuell bedient werden (manuelles Bedienelement), wodurch eine Evakuierung (Verlassen des Innenraumes des Raumes) sichergestellt ist.
3. Das mechanische Türschloss (Schließelement, Sperrelement, insbesondere keine weiteren mechanisch beweglichen Teile nötig) kann deutlich vereinfacht werden (cost savings!):
   a. Der Door Switch (Externsensor, locked signal für Flugzeug, welcher in der Wand sitzt) kann durch Endlagenschalter im Schloss (Sperrsensoren, Emulation, Externsensor) ersetzt werden. Es wird somit nur noch ein Bolzen (Schließelement und Sperrelement fallen zusammen) zur Verriegelung benötigt, der in das zweite Türblatt fährt. Es wird kein Bolzen (obsoletes Riegelelement) gebraucht der in die Wand fährt und den Door Switch auslöst. Die aus der Praxis bekannte komplexe Zahnraduntersetzung im mechanischen Türschloss entfällt restlos.
   b. Der aus der Praxis bekannte mechanische Verriegelungsschutz bei geöffneter Tür (Offenstellung) kann entfallen und softwareseitig implementiert werden (Steuereinheit, Auswertung von Zusatzsensor für Stellung des Türblatts und Sperrsensor). Bisher verhindert eine aus der Praxis bekannte federgetriebene Mechanik das manuelle Verriegeln bei geöffneter Tür. Dies kann durch den Door closed sensor (Zusatzsensor) und die Endlagenschalter (Sperrsensoren) erkannt und elektromechanisch verhindert werden (Steuereinheit: Tür verriegelt nur wenn door closed bzw. Tür entriegelt automatisch, wenn Tür nicht geschlossen und door not unlocked).
4. Eine optionale Integration des Touchless Switches (Befehlssensor) in der Tür stellt eine intuitive Bedienung der Tür sicher. Der Sensor befindet sich nahe des herkömmlichen mechanischen Interfaces des mechanischen Türschlosses (manuelles Bedienelement). Der Sensor wird bei Türöffnung vom Nutzer weggedreht, ist also außerhalb des Sichtfeldes, wodurch ausschließlich der für eine Türschließung zuständige Touchless Switch im Sichtfeld des Nutzers ist.
5. Die Lösung ermöglicht eine vereinfachte Integration in bestehende Türen, da die elektrischen Bauteile im Modulabschnitt und damit in der Tür untergebracht werden (Antrieb, insbesondere Linearantrieb: Linearmotor, Sperrsensoren, Zusatzsensoren, Externsensoren, Befehlssensoren, Anzeigeelement: Touchless Switch). Der Integrationsbedarf in den unterschiedlichen Monumenten wird signifikant reduziert.
6. Die Kopplung des Antriebs mit dem mechanischen Türschloss im inneren Türblatt verringert aufgrund einer Reduktion der Anzahl der Bauteile die Systemkomplexität und Kosten. Der Reibungswiderstand (nicht selbsthemmend) ist für eine manuelle Nutzung minimal.

Die vorgeschlagene Lösung stellt sich als Gesamtkonzept wie folgt dar:
Diese Lösung integriert alle relevanten Komponenten eines berührungslosen Produktes in der Tür, welche gemäß derzeitiger bekannter Praxis außerhalb der Tür verbaut werden sollten. Dies schafft viele Synergien und ist für den Linefit-Markt bevorzugt und kostenoptimiert.

Das Konzept ermöglicht die (vereinfachte=kostengünstige) Entwicklung zweier Produkte "Automatic Door Lock (nur Schloss automatisiert)" und "Touchless Door and Lock (Tür und Schloss automatisiert)", sowie eine Applikation in Einflügel- als auch Falttüren. Insbesondere das Konzept "Touchless Door and Lock" einer Einflügeltür kann so umgesetzt werden.

Die Energie- und Signalübertragung zwischen Türrahmen und Türblatt (Kabelübergang) sowie innerhalb des Türblatts ermöglicht dieses Konzept. Der eigentliche Verriegelungsmechanismus wird gegenüber der üblichen Praxis (=manuelle Bedienung) vereinfacht, da nun keine aus der Praxis bekannte Getriebeuntersetzung und Bewegungsübertragung auf einen zweiten Bolzen notwendig wird.

Der Verrieglungsmechanismus kann besonders leicht manuell bedient werden. Allgemein verwendete horizontale Verriegelungsmechanismen können im Rahmen der vorgeschlagenen Lösung wiederverwendet werden. Wie heute üblich, ist der Verriegelungsmechanismus für Personen beidseitig zugänglich. Der Zugang ist versteckt angeordnet, da dieser in der Regel nur durch die Crew verwendet wird. So kann die Lavatory von außen durch die Crew manuell ver- und entriegelt werden (Taxi, Takeoff, Landing preparation) oder im Notfall entriegelt werden. Von Innen (Innenraum) kann das Schloss, wie heute üblich, manuell bedient werden. Dadurch erfährt der Nutzer bei einer berührungslosen Nutzung ein visuelles und auch akustisches Feedback (Hörbares Bewegen des Sperrelements und des manuellen Bedienelements).

Der Touchless Switch with Indication (Befehlssensor mit Anzeigeelement), der die Türverriegelung initiiert ist nun intuitiv in der Nähe des mechanischen Verstellelements (manuelles Bedienelement) zu finden. Bei geöffneter Tür (Offenstellung) dreht sich dieser Switch aus dem Blickfeld, weshalb bei einem möglichen Produkt "Touchless Door and Lock" ausschließlich die zur Türbewegung gehörenden Touchless Switches im Blickfeld des Nutzers sind.

Die vorgeschlagene Lösung lässt sich nochmals wie folgt zusammenfassen:
Der elektromechanische Verriegelungsmechanismus automatisiert das mechanische Türschloss. Das generelle Schlosskonzept wird grundsätzlich beibehalten, signifikant vereinfacht (Komplexität reduziert) und durch einen nicht-selbsthemmenden Linearaktuator (z.B. Linear-Steppermotor) ergänzt. Alle weiteren elektrischen Bauteile werden, soweit möglich, in die Tür verlegt, um den Integrationsbedarf verschiedener Lavatorys kleinstmöglich zu gestalten.

Das Konzept für Falttüren umfasst:
1. Elektromechanischer Verriegelungsmechanismus im inneren Türblatt bestehend aus
   a. Mechanisches Türschloss
   b. Nicht-selbsthemmender Antrieb
   c. Min. 1 Positionssensor (locked & unlocked signal)
   d. Eigenständiger door locked sensor für Flugzeug (Kabinenmanagementsystem: Beleuchtung & occupied sign)
   e. Aufnahme für Riegel im äußeren Türblatt
2. Kabelübergang
3. Door Closed Sensor
4. Optional: Touchless Switch with Indication im inneren Türblatt

Das Konzept für Einflügeltüren (Siehe auch Varianten A & B des Ausführungsbeispiels) umfasst:
1. Elektromechanischer Verriegelungsmechanismus in der Einflügeltür bestehend aus
   a. Mechanisches Türschloss
   b. Nicht-selbsthemmender Antrieb
   c. Min. 1 Positionssensor (locked & unlocked signal)
   d. Eigenständiger door locked sensor für Flugzeug (Kabinenmanagementsystem: Beleuchtung & occupied sign)
   e. Schlossfalle in Wand
2. Kabelübergang
3. Door Closed Sensor
4. Optional: Touchless Switch with Indication in der Einflügeltür

Das Konzept für Einflügeltüren (siehe auch Variante C des Ausführungsbeispiels) umfasst:
1. Elektromechanischer Verriegelungsmechanismus in der Einflügeltür bestehend aus
   a. Mechanisches Türschloss
   b. Integriertes Zuhalteelement
   c. Nicht-selbsthemmender Antrieb
   d. Rückstellfeder
   e. Min. 1 Positionssensor (locked & unlocked signal)
   f. Optional: Eigenständiger door locked sensor für Flugzeug (Kabinenmanagementsystem: Beleuchtung & occupied sign)
   g. Schlossfalle in Wand
2. Kabelübergang
3. Door Closed Sensor
4. Optional: Touchless Switch with Indication in der Einflügeltür
5. Door Switch in der Wand, wenn 1d nicht gewählt (so wie heute bei Falttüren)
6. Tür-Zuhalteelement (z.B. Kugelschnäpper)
   a. Optional (Subvariante A): Anbindung an Antrieb zum Einziehen
   b. Optional (Subvariante B): Einziehmechanismus (z.B.: Elektromagnet)

Das Konzept für Einflügeltüren (siehe auch Variante D des Ausführungsbeispiels) umfasst:
1. Elektromechanischer Verriegelungsmechanismus in der Einflügeltür bestehend aus
   a. Mechanisches Türschloss
   b. Nicht-selbsthemmender Antrieb
   c. Rückstellfeder
   d. Min. 1 Positionssensor (locked & unlocked signal)
   e. Optional: Eigenständiger door locked sensor für Flugzeug (Kabinenmanagementsystem: Beleuchtung & occupied sign)
   f. Schlossfalle in Wand
2. Zuhalteelement / Tür-Zuhalteelement (z.B. Kugelschnäpper)
   a. Optional (Subvariante DA): Gekoppelt mit Elektromechanischen Verriegelungsmechanismus / Anbindung an Antrieb zum Einziehen
   b. Optional (Subvariante DB): Entkoppelt; eigenständiger Aktuator zum Einziehen / Einziehmechanismus (z.B.: Elektromagnet)
3. Kabelübergang
4. Door Closed Sensor
5. Optional: Touchless Switch with Indication in der Einflügeltür
6. Door Switch in der Wand, wenn 1d nicht gewählt (so wie heute bei Falttüren)

Die Elektromechanischen Verriegelungsmechanismen berücksichtigen die unterschiedlichen Türarten (Einflügeltür vs. Falttür), sowie bei der Einflügeltür verschiedene Lösungsvarianten, die (für die Produkte "Automatic Door Lock" bzw. "Touchless Door and Lock") interessant sind. Die Elektrifizierung ermöglicht eine Adaption und Komplexitätsreduktion der aus der Praxis bekannten Türschlossprinzipien (insb. Bei Falttüren). Mindestens 1 Positionssensor (z.B. Absolutpositionssensor oder 2 Endlagenschalter) erkennen die Positionen locked (Sperrlage) und unlocked (Freigabelage) zur Steuerung und Statuskommunikation. Ein eigenständiger Endlagenschalter erkennt die locked Position, um das entsprechende Signal an das Flugzeug zu kommunizieren (wird für Lichtsteuerung und occupied sign in der Kabine genutzt; ersetzt Door Switch in der Wand). Bei den Lösungen für Einflügeltüren könnte weiterhin der Door Switch in der Wand verwendet werden, da hier ein Verriegelungsbolzen in die Wand fährt. Alternativ können die Zustandssignale der Tür über die Steuereinheit an das Flugzeug übermittelt werden. Der Elektromechanische Verriegelungsmechanismus beinhaltet bzw. geht einher mit einer Aufnahme für den Verriegelungsmechanismus (Verriegelungsbolzen oder Schlosszunge) in der Wand (Einflügeltür) bzw. im gegenüberliegenden, äußeren Türblatt (Falttür). Die speziellen Lösungen für die unterschiedlichen Türtypen, sowie Lösungsvarianten für die Einflügeltüren werden nachfolgend erläutert und Unterschiede herausgearbeitet.

Der Kabelübergang stellt die Signalkommunikation und Stromversorgung zwischen Tür und Wand sicher.

Der Door Closed Sensor detektiert die geschlossene Tür, damit der Schlossaktuator ausschließlich im geschlossenen Zustand verriegeln kann. Bei Falttüren kann hier der zusätzliche Verriegelungsschutz softwareseitig ersetzt werden. So könnte ein ausgefahrener Verriegelungsbolzen (z.B. manuell ausgefahren) bei nicht geschlossener Tür erkannt, und die Entriegelungsbewegung durchgeführt werden.

Dieses Konzept kann in den Produkten "Touchless Door and Lock" und "Automatic Door Lock" genutzt werden. In diesem Fall wird nur der Schlossaktuator bzw. Door Lock Actuator durch das hier beschriebene Konzept ersetzt. Der Door Lock Actuator ist dann mit einer zentralen Steuereinheit der Produkte verbunden. Ein Touchless Switch with Indication kann optional neben der Schnittstelle (manuelles Bedienelement) des mechanischen Türschlosses im inneren Türblatt integriert werden, um eine intuitive Bedienung zu ermöglichen.

Das Konzept berücksichtigt flugzeugspezifische Charakteristiken wie u.a. Robustheit, manuelle Übersteuerung gem. CS25, Sicherheit. Der Elektromechanische Verriegelungsmechanismus kann stets manuell bedient werden.

Für Manuell bedienbarer Falttüren gilt:
Zunächst werden die heute in der Praxis verwendeten Türschlösser beschrieben:
Ein Verriegelungsbolzen unterbindet ein Auffalten und damit Öffnen der geschlossenen Tür. Dieser Verriegelungsbolzen fährt aus dem äußeren Türblatt in die Riegelaufnahme des Inneren. Der Verriegelungsbolzen kann über den Schlossknauf über eine Untersetzung bewegt werden. Ein zweiter Bolzen fährt in die Wand. In dieser Wand ist ein Door Switch verbaut, der dem Flugzeug das door locked signal bereitstellt (für occupied sign und vom Flugzeug gesteuerte Beleuchtung der Lavatory). Der Verriegelungsschutz erlaubt eine Verriegelung (Verschiebung des Schlossknaufes nach links), wenn dieser durch das äußere Türblatt eingedrückt wird. Die Freigabe der Verriegelung erfolgt im vollständig geschlossenen Zustand (nur dann ist eine Verriegelung sinnvoll). Eine Status Indikation zeigt den Status im öffentlichen Bereich an (vacant vs. occupied). Der Zustand im zu verriegelnden Bereich wird durch die Position des Türknaufs, sowie ein farbiges Blech (rot vs. grün), welches mit dem Türknauf verschoben wird, angezeigt. Aus dem öffentlichen Bereich kann die Tür manuell über das push plate durch Drücken geöffnet werden. Im zu verriegelnden Bereich wird die manuelle Öffnung durch Ziehen am Griff ermöglicht. Die Verrieglung kann auch aus dem öffentlichen Bereich über den manual override betätigt werden. Hierfür kann der Riegel, welcher durch eine Klappe abgedeckt und versteckt ist, zugänglich gemacht, und manuell verschoben werden.

Für manuell bedienbarer Einflügeltüren gilt:
Ein in der Praxis verwendetes Türschloss für Einflügeltüren ist wie folgt aufgebaut:
Eine Schlosszunge hält die Tür sowohl im entriegelten, als auch im verriegelten Zustand in der geschlossenen Position. Die Schlosszunge wird durch die Aufnahme in der Wand gehalten. Die Schlosszunge kann über beidseitige Betätigung der Türklinke eingezogen werden und ein Öffnen der Tür ermöglichen. Wird das Einflügeltürschloss durch den Schlossknauf verriegelt, also in eine Sperrposition geschoben, wird eine Drehbewegung der Türklinke blockiert. Gleichzeitig wird ein bewegliches Teil, welches einen Magneten enthält, in der Schlosszunge, in Richtung Wand bewegt. Hierdurch erkennt der Door Switch das door locked signal. Der Door Switch stellt dem Flugzeug das door locked signal bereit (für occupied sign und vom Flugzeug gesteuerte Beleuchtung der Lavatory). Die Schlosszunge ist federnd gelagert, sodass diese stets in Richtung Wand gedrückt wird und durch die Türklinke aktiv eingezogen wird. Eine Status Indikation zeigt den Status im öffentlichen Bereich an (vacant vs. occupied). Der Zustand im zu verriegelnden Bereich wird durch die Position des Türknaufs, sowie ein farbiges Blech (rot vs. grün), welches mit dem Türknauf verschoben wird, angezeigt. Die Verrieglung kann auch aus dem öffentlichen Bereich über den manual override betätigt werden. Hierfür kann der Verriegelungsmechanismus, welcher durch eine Klappe abgedeckt und versteckt ist, zugänglich gemacht, und manuell verschoben werden.

Im Folgenden werden die Bauteile beschrieben:
Dies gilt für eine Falttür, jedoch werden die erläuterten Komponenten größtenteils auch bei der Einflügeltür verwendet. Die Ausführung des Elektromechanischen Verriegelungsmechanismus wird nun differenziert, und im Anschluss die weiteren Komponenten charakterisiert:
Elektromechanischer Verriegelungsmechanismus Falttür:
Der elektromechanische Verriegelungsmechanismus für Falttüren basiert auf folgendem Konzept:
- Mechanisches Türschloss
- Nicht-selbsthemmenden Antrieb
- Min. 1 Positionssensor (locked & unlocked signal)
- Eigenständiger door locked sensor für Flugzeug (Kabinenmanagementsystem: Beleuchtung & occupied sign)

Die Falttür ist an der einen Seite angeschlagen (dort ist das Türscharnier angebunden) und kann am Griff aufgezogen werden. Dadurch fährt das Mittelscharnier in den zu verriegelnden Raum. Das mechanische Türschloss wird auf das innere Türblatt verlegt, damit nur ein einziger Kabelübergang (Wand - inneres Teilblatt) benötigt wird.

Ein eigenständiger Door Locked Sensor (z.B. ein Taster) stellt das door locked signal bereit, sodass der Door Switch und der in die Wand fahrende Riegel entfällt (vgl. bisheriges aus der Praxis bekanntes Konzept). Das Schlosskonzept wird hierdurch vereinfacht.

Mindestens ein Positionssensor (z.B. zwei weitere Endlagenschalter) signalisieren der Steuereinheit die Zustände "verriegelt" (Sperrlage) und "entriegelt" (Freigabelage). Es können mechanische Taster, aber auch Reedkontakte mit Magneten verwendet werden.

Der nicht-selbsthemmende Antrieb (z.B. Stepper-Motor mit Steilgewinde) treibt einen Verriegelungsbolzen an, welcher vom äußeren ins innere Türblatt verlegt wurde. Die Riegelaufnahme ist entsprechend im äußeren Türblatt.

Der Verriegelungsschutz kann entfallen, da eine geschlossene Tür durch den Door Closed Sensor zuverlässig erkannt wird und nur dann verriegelt wird. Gleichzeitig kann das System bei nicht-geschlossener Tür stets den entriegelten Zustand ansteuern. Sollte ein Nutzer die Verriegelung bei nicht geschlossener Tür ausfahren (Ausfahren des Sperrelements = verriegeln) würde durch das System der Entriegelungsvorgang ausgelöst. Das Schlosskonzept wird hierdurch vereinfacht.

Der manual override ist von der öffentlichen Seite durch Verschieben des Verriegelungsbolzens jederzeit möglich. Der Verriegelungsbolzen kann durch Anheben einer Klappe zugänglich gemacht werden.

Die gewohnte Indikation sowohl im öffentlichen, als auch im zu verriegelnden Bereich bleibt bestehen, wie in "Manuell bedienbare Falttüren" beschrieben.

Elektromechanischer Verriegelungsmechanismus Einflügeltür:
Der elektromechanische Verriegelungsmechanismus für Einflügeltüren basiert auf folgendem Konzept:
- Mechanisches Türschloss
- Nicht-selbsthemmender Antrieb
- Min. 1 Positionssensor (locked & unlocked signal)
- Optional: Eigenständiger door locked sensor für Flugzeug (Kabinenmanagementsystem: Beleuchtung & occupied sign)

Das Konzept des mechanischen Türschlosses wird grundsätzlich beibehalten, wie in "Manuell bedienbare Einflügeltüren" beschrieben. Ein nicht-selbsthemmender Antrieb kann die Türklinkenbewegung durch die Verschiebung eines Blockierelements (Sperrelement) in die Sperrlage mechanisch unterdrücken. Die Türklinke kann aus dem öffentlichen Bereich nicht gedrückt, und die Schlosszunge (Schließelement) nicht eingefahren werden. Zum Entriegeln fährt das Blockierelement (Sperrelement) in die Freigabelage, um die Türklinkenbewegung wieder freizugeben. Der Antrieb kann zusätzlich die Schlosszunge einziehen, um eine motorische Öffnung der Tür zu ermöglichen. Die Schlosszunge wird stets durch eine Feder in den ausgefahrenen Zustand zurückgestellt, um im Fehlerfall die Tür im geschlossenen Zustand zu halten. Zwei mechanische Alternativen A und B sind denkbar:

### Alternative A (Entkopplung Schlossknauf):

Der Schlossknauf ist im entriegelten Zustand mechanisch von der Schlosszunge entkoppelt, weshalb der Antrieb das Verriegelungselement und die Schlosszunge, nicht jedoch den Schlossknauf bewegt. Wird die Türklinke im entriegelten Zustand betätigt, verbleibt der Schlossknauf in der entriegelten Position.

### Alternative B (Kopplung Schlossknauf):

Bei dieser Variante ist der Schlossknauf fest mit dem Verrieglungselement gekoppelt. Zu den Zuständen "Verriegelt" (Sperrlage) und "Entriegelt" (Freigabelage) kann der Schlossknauf nun auch in einen Zustand Geöffnet (Offenlage) fahren.

### Variante C (integriertes Zuhalteelement & Verriegelungsbolzen):

Bei dieser Variante wird die Tür durch ein Zuhalteelement (z.B. Kugelschnäpper) in der geschlossenen Position gehalten. Eine Feder (z.B. Druck- oder Torsionsfeder) drückt das Zuhalteelement nach außen. Die Tür kann beidseitig manuell geöffnet werden. Aus dem öffentlichen Bereich kann die Tür mithilfe eines Griffelelements aufgezogen, und aus dem zu verriegelnden Bereich aufgedrückt werden. Das Zuhalteelement gibt die Türbewegung frei, sobald eine gewisse Kraft überwunden wurde. Der Verriegelungsbolzen (Sperrelement) wird durch den Linearaktuator bewegt und verfährt zum Verriegeln in die Wand. Im entriegelten Zustand ist der Bolzen in der Tür. Um eine Öffnungsbewegung zu erleichtern (insb. motorisch) kann das Zuhalteelement entgegen der Federkraft elektromechanisch eingezogen werden. Analog zu Variante A und B kann der Antrieb, welcher den Verriegelungsbolzen bewegt, das Zuhalteelement so in einer dritten Stufe einziehen. Hierfür fährt der Linearaktuator den Verriegelungsbolzen inkl. Zuhalteelement entgegen der Federkraft weiter ein. Die Feder stellt sicher, dass die Tür auch im stromlosen Zustand stets in den Zustand closed & unlocked fährt/verbleibt.

### Variante D (paralleles Zuhalteelement & Verriegelungsbolzen):

Wie Variante C, allerdings mit folgenden Änderungen:
Das Zuhalteelement ist parallel zum Verriegelungsbolzen in der Türebene angeordnet. Das Zuhalteelement kann durch eine Kopplung mit dem Verriegelungsbolzen durch den Antrieb eingezogen werden, so dass die Tür geöffnet werden kann. Alternativ kann ein weiterer Aktuator (z.B. Elektromagnet) das Zuhalteelement unabhängig vom Antrieb einziehen.

Ein eigenständiger Door Locked Sensor kann optional im Elektromechanischen Verriegelungsmechanismus integriert werden. Da bei den Varianten A bis D stets Bauteile in die Wand verfahren, kann der herkömmliche Door Switch genutzt werden.

Folgende Komponenten / Eigenschaften werden analog zu "Elektromechanischer Verriegelungsmechanismus Falttür" ausgeführt:
- Min. 1 Positionssensor (locked & unlocked signal)
- Manual override (praxisübliches Konzept)
- Indikation (praxisübliches Konzept)

Folgende Komponenten werden für alle Türvarianten, sowie Varianten A-D des Elektromechanischen Verriegelungsmechanismus benötigt:

### Kabelübergang:

Der Kabelübergang versorgt die Tür/ das Innere Türblatt mit elektrischer Energie und stellt die Signalkommunikation sicher. Der Kabelübergang ist robust gegenüber Vandalismus, und schützt die in ihm verlaufenden Kabel. Eine Steckverbindung ermöglicht ein schnelles Ausbauen der Tür.

### Door Closed Sensor:

Der Door Closed Sensor stellt das door closed Signal bereit, um eine Verriegelung bei ausschließlich geschlossener Tür zu gewährleisten. Dieses Signal kann auch verwendet werden, um die Türaktuation zu steuern. Es können ein Reedsensor mit Magnet oder Endlagenschalter wie Taster, aber auch Lichtschranken verwendet werden. Durch die Elektrifizierung der Tür ist der Sensor bevorzugt in der Tür zu integrieren, da der relativ kleinere Magnet einfacher in der Wand oder Führungsschiene der Lavatorytür integriert werden kann. Alternativ könnte auch der Magnet in der Tür und der Sensor außerhalb der Tür, also in der Führungsschiene oder der Wand verbaut werden.

### Optional: Touchless Switch with Indication:

Der Touchless Switch bildet die Schnittstelle zwischen Nutzer und Tür. Konkret kann das Türschloss durch diesen berührungslos bedient werden, also eine Ver-/ Entriegelung initiiert werden. Eine Indikation kann die Funktion des Switches, sowie optional den Zustand des Türschlosses anzeigen. Durch die Elektrifizierung der Tür kann dieser Touchless Switch ebenfalls in der Tür integriert werden. Dies reduziert Integrationsaufwände in der Lavatory. Gleichzeitig wird das Bedienkonzept intuitiver, da das Bedienelement in unmittelbarer Nähe zum herkömmlichen Bedienelement, dem Schlossknauf, ist.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: einen horizontalen Querschnitt durch eine einflügelige Lavatory-Tür mit Schlossmodul a) closed & locked, b) closed & unlocked, c) Variante A - opened & unlocked, d) Variante B - opened & unlocked, d) manually opened & unlocked
- Figur 2: eine Innenansicht einer zweiflügeligen Lavatory-Tür mit alternativem Schlossmodul, und zusätzlich mit Türschloss nach dem Stand der Technik,
- Figur 3: eine teiltransparente Ansicht des Schlosses aus Fig. 2 in einer konkreteren Darstellung a) unlocked, b) locked,
- Figur 4: in einer Darstellung gemäß Fig. 1 eine alternative Lavatory-Tür mit Zuhalteelement a) closed & locked, b) closed & unlocked, c) opened & unlocked,
- Figur 5: in einer Darstellung gemäß Fig. 1 mit zweiter Schnittebene eine alternative Lavatory-Tür mitalternativem Zuhalteelement a) closed & locked, b) closed & unlocked, c) opened & unlocked, und Option einer separaten aktuatorischen Ansteuerung des Zuhalteelements,
- Figur 6: eine teiltransparente Ansicht eines Türschlosses nach dem Stand der Technik für eine Falttür a) vom Innenraum aus, b) von außen,
- Figur 7: eine Ansicht nach Figur 6 eines Türschlosses nach dem Stand der Technik für eine Einflügeltür a) vom Innenraum aus, b) von außen.

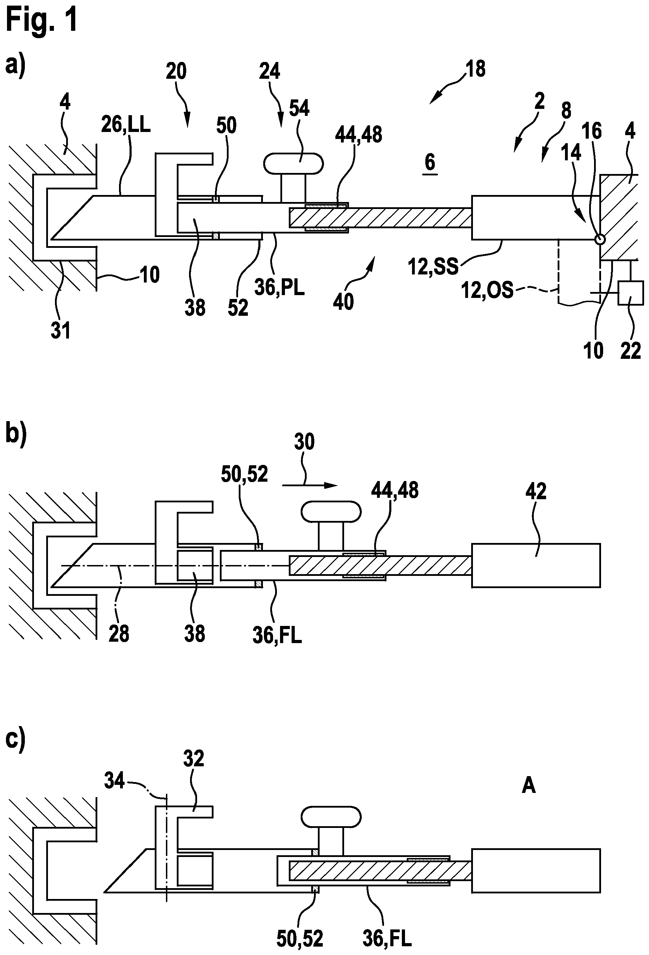

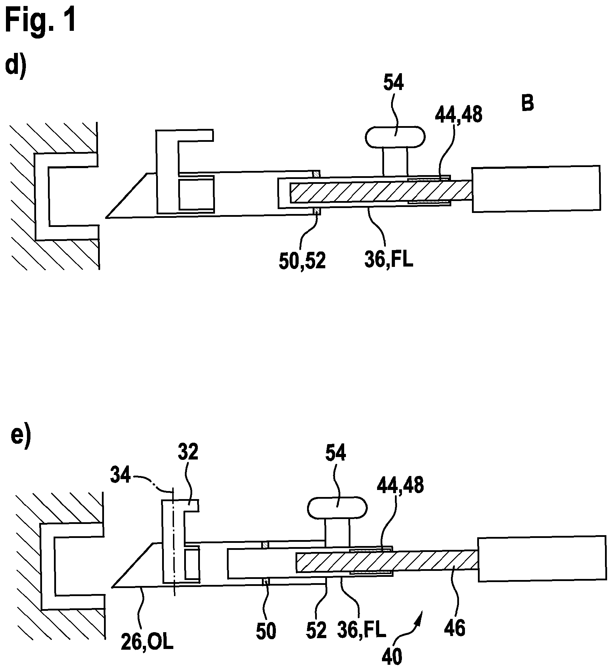

Figur 1 zeigt in Draufsicht von oben einen horizontalen Querschnitt durch einen Ausschnitt eines Raumes 2, hier eines Waschraumes, auch "Lavatory" genannt, eines nicht weiter dargestellten Flugzeuges. Der Raum weist eine Wandung 4 auf, die einen Innenraum 6 des Raumes 2 umgrenzt. In die Wandung 4 ist eine Tür 8 eingesetzt. Die Tür 8 enthält einen Türrahmen 10, welcher fest in der Wandung 4 verankert ist, sowie ein Türblatt 12. Die Tür 8 ist hier eine Einflügeltür, d.h. diese weist ein einziges, festes Türblatt 12 auf. Das Türblatt 12 ist vermittels eines Scharniers 14 am Türrahmen 10 um eine Schwenkachse 16 drehbar gelagert. Figur 1 zeigt eine Schließstellung SS der Tür 8, in welcher der Raum 2 durch das Türblatt 12 verschlossen ist. Gestrichelt ist auch eine Offenstellung OS der Tür 8 bzw. des Türblatts 12 angedeutet, bei welcher Personen den Innenraum 6 des Raumes 2 durch den Türrahmen 10 betreten oder verlassen können.

Die Tür 8 enthält ein Schlossmodul 18, welches in Figur 1 nur ausschnittsweise dargestellt ist. Das Schlossmodul 18 enthält unter anderem einen Modulabschnitt 20 des Türblatts 12. Der Modulabschnitt 20 ist ein räumlicher Teilbereich des Türblatts 12, in welchem das Schlossmodul 18 angeordnet ist.

Ein hier nur symbolisch angedeuteter elektrischer Türantrieb 22 dient dazu, bei entsprechender Ansteuerung das Türblatt 12 motorisch bzw. automatisiert, also ohne händischen Eingriff durch einen Benutzer, zwischen der Schließstellung SS und der Offenstellung OS hin und her zu bewegen.

Das Schlossmodul 18 enthält ein Schloss 24.

Das Schloss 24 enthält ein mechanisches Schließelement 26, hier eine Schlosszunge, die entlang einer geraden Verfahrachse 28 linear entlang ihrer eigenen Mittellängsachse (fällt mit der Verfahrachse 28 zusammen) in oder entgegen der Richtung des Pfeils 30 zwischen einer Schließlage LL (Figuren 1a,b) und einer Offenlage OL (Figuren 1c-e) verfahrbar ist. Eine Schlossaufnahme 31 im Türrahmen 10 bzw. der Wandung 4 dient dazu, gemäß der Figuren 1a,b das Schließelement 26 in der Schließlage LL aufzunehmen und so das Türblatt 12 mechanisch im Türrahmen 10 in der Schließstellung SS zu halten.

Eine Türklinke 32 am Türblatt 12 ist mit dem Schließelement 26 bewegungsgekoppelt: Die Figuren 1a-d zeigen die Türklinke 32 in einer Ruhestellung. Durch die händische Bedienung eines Nutzers kann die Türklinke 32 gedrückt werden, indem diese um eine Drehachse 34 verdreht wird. Die Türklinke 32 ist damit in eine Betätigungsstellung gebracht worden. Dies ist in Figur 1e dargestellt. Durch die Bewegungskopplung von Türklinke 32 und Schließelement 26 und entsprechender Betätigung der Türklinke 32 wird das Schließelement 26 aus der Schließlage LL in die Offenlage OL gezogen. Das Türblatt 12 wird freigegeben und kann aus der Schließstellung SS in die Offenstellung OS bewegt werden. Beim Loslassen der Türklinke 32 kehrt diese aus der Betätigungsstellung in ihre Ruhestellung gemäß Figuren 1a-d zurück. Das Schließelement 26 kehrt daraufhin federgestützt (die Feder ist hier nicht dargestellt) in die Schließlage LL zurück. Auch beim Schließen der Tür 8 kann das Schließelement 26 aufgrund dessen nicht näher erläuterter Anlaufschräge und dem entsprechenden Anlauf am Türrahmen 10 bzw. der Schlossaufnahme 31 in Richtung des Pfeils 30 selbsttätig zurückgedrückt werden. Sobald die Tür 8 "ins Schloss gefallen ist" kehrt das Schließelement 26 entgegen der Richtung des Pfeils 30 in die in Figur 1a gezeigte Position zurück; die Tür 8 ist wieder in der Schließstellung SS gehalten.

Das Schloss 24 enthält weiterhin ein - hier mechanisches - Sperrelement 36, hier einen Sperrriegel. Dieser ist ebenfalls entlang seiner Mittellängsachse, die mit der Verfahrachse 28 zusammenfällt, entlang der Verfahrachse 28 zwischen der in Figur 1a dargestellten Sperrlage PL und der in Figur 1b gezeigten Freigabelage FL bewegbar bzw. verschiebbar. Die Türklinke 32 weist eine Aufnahme 38 auf, in der das Sperrelement 36 in der Sperrlage PL einliegt. Durch das Einliegen bzw. einen entsprechenden formschlüssigen Eingriff ist eine Drehung der Türklinke 32 um die Drehachse 34 verhindert bzw. unterbunden. Dadurch, dass die Türklinke 32 nicht betätigt werden kann, ist verhindert, dass das Schließelement 26 mit deren Hilfe aus der Schließlage LL heraus bewegt wird. Somit ist auch verhindert, dass das Türblatt 12 auf dieser Weise aus der Schließstellung SS bewegt werden kann.

Durch Bewegen des Sperrelements 36 in die Freigabelage FL verlässt das Sperrelement 36 die Aufnahme 38, wie in den Figuren 1b-e dargestellt. Eine Drehbewegung der Türklinke 32 um die Drehachse 34 ist möglich und somit das Herausbewegen des Schließelement 26 aus der Schlossaufnahme 38 sowie das Öffnen der Tür 8.

Das Schloss 24 enthält weiterhin einen nicht-selbsthemmenden Antrieb 40, hier einen Linearantrieb, der hier sowohl mit dem Sperrelement 36 als auch mit dem Schließelement 26 bewegungsgekoppelt ist: durch Betätigung des Antriebs 40 kann sowohl das Schließelement zwischen der Sperrlage PL und der Freigabelage FL motorisch hin und her bewegt werden. Außerdem kann das Schließelement 26 aus der Schließlage LL in die Offenlage OL bewegt werden und auch aus der Offenlage OL freigegeben werden, sodass das Schließelement 26 eigenständig, nämlich durch seine oben genannte Federeigenschaft, wieder in die Schließlage LL zurückkehren kann bzw. zurückkehrt.

Die Bewegungskopplung ist wie folgt realisiert: der Antrieb 40 weist ein Fixierende 42 und ein Abtriebsende 44 auf. Das Fixierende 42 ist fest im Türblatt 12 verankert. Weiterhin ist eine relativ zum Fixierende 42 rotierbare Spindel 46 mit Spindelmutter 48 vorgesehen, so dass die Spindelmutter 48 das relativ zum Türblatt 12 bewegbare Abtriebsende 44 bildet. Die Spindelmutter 48 wiederum ist fest mit dem Sperrelement 36 verbunden. Eine Drehung der Spindel 46 führt somit stets zu einer Zwangsbewegung des Abtriebsendes 44 und damit des Sperrelements 36 in oder entgegen der Richtung des Pfeils 30 relativ zum Türblatt 12.

Zwischen den in den Figuren 1a und b gezeigten Positionen ist das Sperrelement 36 innerhalb des bzw. relativ zum Schließelement 26 frei beweglich, sodass dieses in die Aufnahme 38 ein- oder aus dieser ausfahren kann. Wird jedoch die Spindelmutter 48 ausgehend von Figur 1a über die in Figur 1b gezeigte Position in Richtung des Pfeils 30 weiter bewegt, hintergreift ein Mitnahmeelement 50 am Sperrelement 36 ein Gegenelement 52 am Schließelement 26 und zieht dieses in Richtung des Pfeils 30 mit sich. Somit wird das Schließelement 26 aus der Schließlage LL gezogen, bis es schließlich gemäß Fig. 1c,d die Schlossaufnahme 31 verlassen hat und das Türblatt 12 freigegeben ist, um aus der Schließstellung SS bewegt zu werden. Eine Betätigung der Türklinke 32 ist hierbei nicht notwendig. Sowohl das Ver- und Entriegeln der Tür 8 als auch das Freigeben des Türblatts 12 erfolgt also motorisch durch Betätigung des Antriebs 40.

Das Sperrelement 36 weist außerdem ein manuelles Bedienelement 54, hier in Form eines Bedienknaufs, auf. Ein Nutzer kann händisch am Bedienelement 54 angreifen, um das Sperrelement 36 zu bewegen und so die Tür 8 manuell zu Ver- oder entriegeln. Gemäß der Figuren 1a,b nimmt dabei das Bedienelement 54 zwei verschiedene Ortspositionen ein, anhand derer ein Nutzer auch erkennen kann, ob die Tür 8 verriegelt oder entriegelt ist. In einer ersten Variante A, die in Figur 1c gezeigt ist, weist das Bedienelement 54 einen nicht näher erläuterten Freilauf bezüglich des Sperrelements 36 auf. Wird das Sperrelement 36 daher ausgehend von Figur 1b zu Figur 1c hin motorisch durch den Antrieb 40 weiter in Richtung des Pfeils 30 verschoben, folgt das Bedienelement 54 dieser Bewegung nicht und zeigt einem Benutzer weiterhin dieselbe Ortsposition wie in Figur 1b ("entriegelt") an. In einer zweiten Variante B gemäß Figur 1d hingegen ist das Bedienelement 54 fest mit dem Sperrelement 36 verbunden und folgt somit auch der entsprechenden Bewegung des Sperrelements 36 durch eine weitere Verschiebung in Richtung des Pfeils 30 ausgehend von Figur 1b zu Figur 1d hin.

Weitere Bestandteile des Schlossmoduls 18 sind in Figur 1 der Übersichtlichkeit halber nicht, sondern erst in den weiteren Figuren dargestellt.

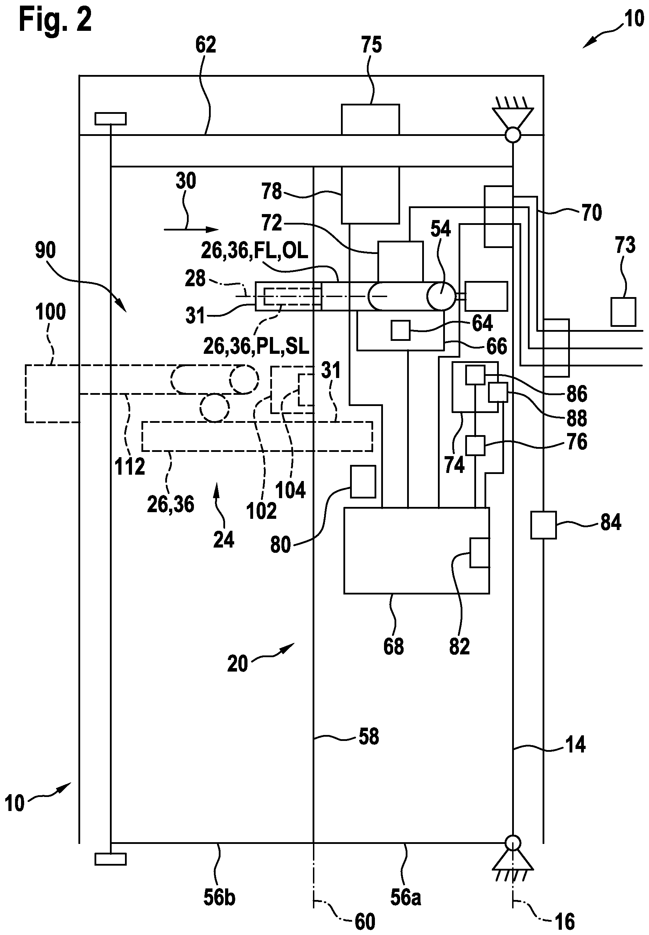

Figur 2 zeigt in einer Ansicht vom Innenraum 6 des Raumes 2 her eine alternative Tür 8, die anstelle eines starren, einflügligen Türblatts 12 ein zweiteiliges Türblatt 12 aufweist, das als Falttür ausgestaltet ist. Das Türblatt 12 weist daher zwei Teilblätter 56a,b auf. Diese sind über ein Mittelscharnier 58 um die Drehachse 60 drehbar bzw. gelenkig miteinander verbunden. Das Teilblatt 56a ist ein "inneres" Teilblatt, da dieses wiederum über ein Scharnier 14 um die Schwenkachse 16 drehbar am Türrahmen 10 angeschlagen ist. Das Teilblatt 56b ist dagegen ein "äußeres" Teilblatt, welches nicht direkt am Türrahmen 10 angelenkt ist. Stattdessen ist dieses in einer Führungsschiene 62 linear im Türrahmen 10 geführt.

Im Schloss 24 fallen hier Schließelement 26 und Sperrelement 36 zu einem einzigen identischen Element zusammen. Im Folgenden wird der Einfachheit halber nur eines dieser Elemente erwähnt, wenn von dem gemeinsamen Bauteil gesprochen wird. Dieses kann zwischen der in Figur 2 gezeigten offen Lage OL, die gleich der Freigabelage FL ist, in die gestrichelt angedeutete Schließlage LL, die gleich der Sperrlage PL ist, überführt werden. Das Sperrelement 36 ist wie in Figur 1 entlang seiner Mittellängsachse und einer hiermit zusammenfallenden Verfahrachse 28 lineare entlang einer Geraden bewegbar. Das Sperrelement 36 ist ausschließlich am Teilblatt 56a linear beweglich geführt. Auch hier verfügt das Sperrelement 36 wieder über ein manuelles Bedienelement 54, dass gemäß Variante B in Figur 1 fest an diesem angeordnet ist.

Die Bewegung des Sperrelements 36 erfolgt wie in Figur 1 durch eine feste Bewegungskopplung mit dem Antrieb 40.

Die Schlossaufnahme 31 für das Schließelement 26 ist im Teilblatt 56b angeordnet. In der Schließlage LL liegt das Schließelement 26 in der Schlossaufnahme 31 ein, in der Offenlage OL ist es vollständig aus dieser ausgefahren. Somit ist in der Schließlage LL eine Relativbewegung der Teilblätter 56a,b um die Drehachse 60 unterbunden und die Tür 8 sowohl verschlossen als auch verriegelt. In der Offenlage OL dagegen ist die Tür 8 unverschlossen und unverriegelt.

Eine weitere Komponente des Schlossmoduls 18 ist ein Sperrsensor 64. Dieser ist hier als Positionssensor ausgeführt und dient zur Aufnahme der aktuellen Position bzw. Ortslage des Sperrelements 36 (im Rahmen seiner Bewegung entlang der Verfahrachse 28) in Bezug auf das Teilblatt 56a und damit auch zur Erfassung der Sperrlage PL und der Freigabelage FL. Die entsprechend detektierte Lage gibt der Sperrsensor 64 als Sperrsignals 66 aus.

Eine weitere Komponente des Schlossmoduls 18 ist eine Steuereinheit 68. Diese ist signaltechnisch mit dem Sperrsensor 64 und dem Antrieb 40 verbunden, um letzteren auf Basis des Sperrsignals 66 anzusteuern. Insbesondere kann so das Sperrelement 36 jeweils so lange in oder entgegen der Richtung des Pfeils 30 bewegt bzw. angetrieben werden, bis dieses die gewünschte Sperrlage PL oder Freigabelage FL erreicht hat.

Das Teilblatt 56a weist daher den hier nur symbolisch angedeuteten Modulabschnitt 20 auf. Dieser ist derjenige räumliche Teil des Teilblatts 56a, in dem die Komponenten Schloss 24, Antrieb 40, Sperrsensor 64 und Steuereinheit 68 baulich integriert sind.

Die Tür 8 weist einen Kabelübergang 70 zwischen Türblatt 12, hier Teilblatt 56a und dem restlichen Flugzeug, hier der Wandung 4 auf. Durch den Kabelübergang 70 sind in geschützter Weise elektrische und sonstige Leitungen geführt, welche zur Energieversorgung, Kommunikation usw. des Schlossmoduls 18 bzw. des Türblatts 12 mit dem restlichen Flugzeug dienen.

Vorliegend enthält das Schlossmodul 18 weiterhin einen Externsensor 72. Dieser ist ebenfalls baulich im Modulabschnitt 20 integriert, jedoch signaltechnisch nicht mit der Steuereinheit 68 verbunden. Eine von dem Externsensor 72 wegführende Leitung ist daher durch den Kabelübergang 70 geführt, ohne Eingang in die Steuereinheit 68 zu finden. Der Externsensor 72 ist ein insofern ein zum Sperrsensor 64 redundanter, separater "door locked sensor", der feststellt und signaltechnisch ausgibt, ob sich das Sperrelement 36 in der Sperrlage PL oder der Freigabelage FL befindet, mithin ob die Tür 8 verriegelt oder entriegelt ist. Dieser wird aus Sicherheitsaspekten flugzeugsseitig benötigt und darf nicht durch die Funktionalität des Sperrsensor 64 ersetzt werden.

Das Schlossmodul 18 enthält außerdem einen Befehlssensor 74, der wiederum mit der Steuereinheit 68 signaltechnisch verbunden ist. Auch der Befehlssensor 74 ist im Modulabschnitt 20 angeordnet. Der Befehlssensor 74 dient zur Erfassung eines von einem Nutzer gelieferten, mit dem Schlossmodul 20 korrelierten Türbefehls 76. Der Befehlssensor 74 ist hier berührungslos ausgebildet, d.h. ein "touchless switch", um die Tür 8 berührungslos zu bedienen, nämlich vermittels des Antriebs 40 zu verriegeln oder zu entriegeln und für das Öffnen freizugeben und über den in Figur 2 nicht dargestellten Türantrieb 22 motorisch zu öffnen und zu schließen.

Das Schlossmodul 18 enthält auch einen Zusatzsensor 78, der wiederum mit der Steuereinheit 68 signaltechnisch verbunden ist. Auch der Zusatzsensor 78 ist im Modulabschnitt 20 angeordnet. Der Zusatzsensor 78 ist ein "door closed sensor", der mit einem Magneten 75 an der Führungsschiene 62 interagiert und feststellt sowie signaltechnisch ausgibt, ob das Türblatt 12 sich in der Schließstellung SS befindet oder nicht. Insofern wird ein Türzustand 80 (Schließstellung SS oder nicht) erfasst und für die Steuereinheit 68 zur Verfügung gestellt. Durch die Verarbeitung des entsprechenden Sensorsignals in der Steuereinheit 68 kann eine Fehlbedienungssperre des Schlosses 24 realisiert werden, nämlich verhindert werden, dass das Sperrelement 36 durch den Antrieb 40 in die Sperrlage PL verfahren wird, wenn sich die Tür 8 nicht in der Schließstellung SS befindet. Andererseits kann - falls die Sperrlage PL manuell eingestellt wurde - dies detektiert und das Sperrelement 36 in dieser Situation durch den Antrieb 40 stets in die Freigabelage FL bewegt werden.

Der Türzustand 80 bzw. ein entsprechend mit diesem korreliertes Emulationssignal 84 wird im Flugzeug benötigt. In bisherigen Lösungen wurde dieses Emulationssignal 84 durch einen separaten dedizierte, hier nicht dargestellten Sensor ("door switch" 100, siehe unten) im Türrahmen 10 erzeugt. Dieser ist jedoch hier nicht vorhanden. Die Steuereinheit 68 weist daher eine Emulations-Schnittstelle 82 auf. Diese erzeugt bzw. emuliert den door switch 100 bzw. das Emulationssignal 84 an ihrer Emulations-Schnittstelle 82 auf Basis der in der Steuereinheit 68 verfügbaren Daten. Diese Daten sind hier die vom (vom door switch 100 verschiedenen) Zusatzsensor 78 gelieferten Daten in Form des Türzustandes 80. So kann das Emulationssignal 84 dem Flugzeug zur weiteren Verwendung zugeführt werden; der "door Switch" 100 wird obsolet bzw. ersetzt.

Das Schlossmodul 18 enthält außerdem ein Anzeigeelement 86 zur Anzeige einer mit dem Schlossmodul 18 korrelierten Zustandsinformation 88, hier der aktuellen Lage, die der Sperrsensor 64 detektiert: Sperrlage PL oder Offenlage OL. Das Anzeigeelement 86 ist hierzu signaltechnisch mit der Steuereinheit 68 verbunden und erhält von dieser die entsprechende Zustandsinformation 88, hier erzeugt aus dem Sperrsignal 66 des Sperrsensors 64.

Da vorliegend der Befehlssensor 74 als "touchless switch" ausgeführt ist, ist das Anzeigeelement 86 in diesen integriert. Somit ergibt sich insgesamt ein "touchless switch with indication".

In einer nicht dargestellten, alternativen Ausführungsform ist die Steuereinheit 68 nicht im Türblatt 12 bzw. im Modulabschnitt 20 angeordnet, sondern außerhalb des Türblatts 12 bzw. der Tür 8 angeordnet, hier in der Wandung 4. Die entsprechenden Leitungen aus dem Türblatt 12 zu und von den Sensoren usw. zu und von der Steuereinheit sind daher durch den Kabelübergang 70 und vom Türblatt 12 weggeführt, die Verschaltung ist jedoch gleich.

Das Türblatt 12 in Figur 2 ist ein Falt-Türblatt, welches ein vorher im Flugzeug eingebautes Türblatt ersetzt. Dieses wies ein anderes aus der Praxis bekanntes Schlossmodul auf, welches hier gestrichelt dargestellt ist und allgemein mit dem Pfeil 90 bezeichnet ist. Hier war das Schloss 24 im äußeren Teilblatt 56b angeordnet. Das Schließelement 26 / Sperrelement 36 war im Teilblatt 56b angeordnet und fuhr in eine Schlossaufnahme 31 im Inneren Teilblatt 56a ein. Ein zusätzlicher Bolzen 112 war über eine komplexe mechanische Untersetzung mit dem Schließelement 26 / Sperrelement 36 bewegungsgekoppelt und fuhr gleichzeitig in eine Sensoraufnahme im Türrahmen 10 ein, den bereits erwähnten "door switch" 100. Ein motorischer Antrieb war hier nicht vorgesehen. Über eine komplexe Mechanik angebunden war außerdem ein zusätzlicher mechanischer Verriegelungsschutz 102, welcher im Teilblatt 56b angeordnet war und durch ein in der Schließstellung SS eingedrücktes mechanisches Sperrteil 104 realisiert war. Hierdurch wurde die Verriegelung der Tür im nicht geschlossenen Zustand rein mechanisch verhindert.

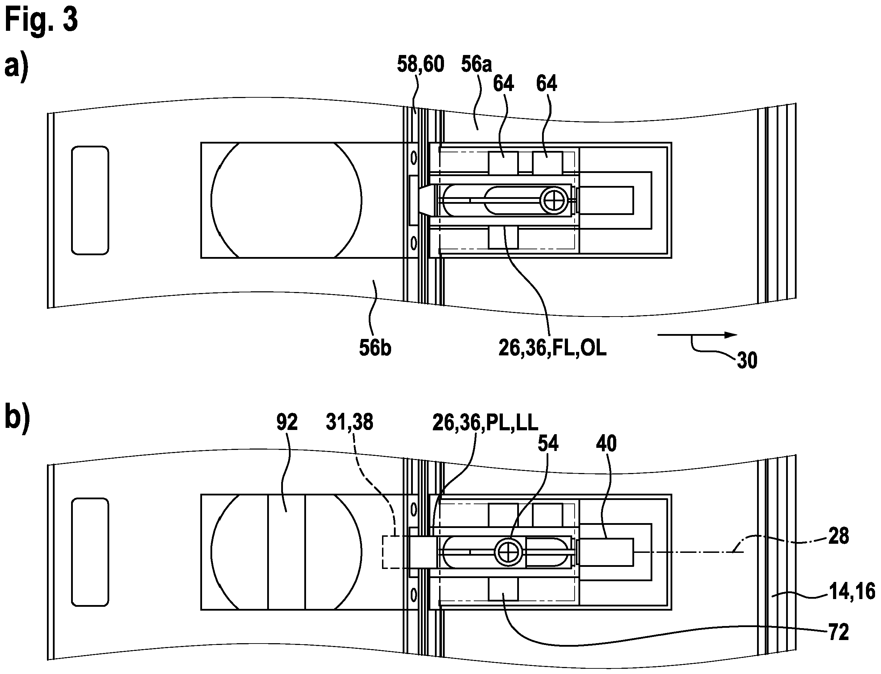

Figur 3 zeigt eine alternative bzw. detailliertere Ausführungsform des vorliegend vorgeschlagenen Schlosses 24 aus Figur 2, wieder in Ansicht vom Innenraum 6 des Raumes 2 aus. Entsprechend zu oben sind die Komponenten des Schlosses 24 im Inneren Teilblatt 56a untergebracht. Im Unterschied zu oben sind hier jedoch zwei Sperrsensoren 64 vorgesehen, die jeweils als Endlagensensoren für die Sperrlage PL und Freigabelage FL.

Am äußeren Teilblatt 56b befindet sich lediglich ein starrer Handgriff 92, um das Falt-Türblatt 12 bzw. die Tür 8 auf Wunsch oder im Notfall händisch zum Innenraum 6 hin zu ziehen und somit öffnen zu können.

Ansonsten gelten die Ausführungen zu Fig. 1 und 2 hier sinngemäß.

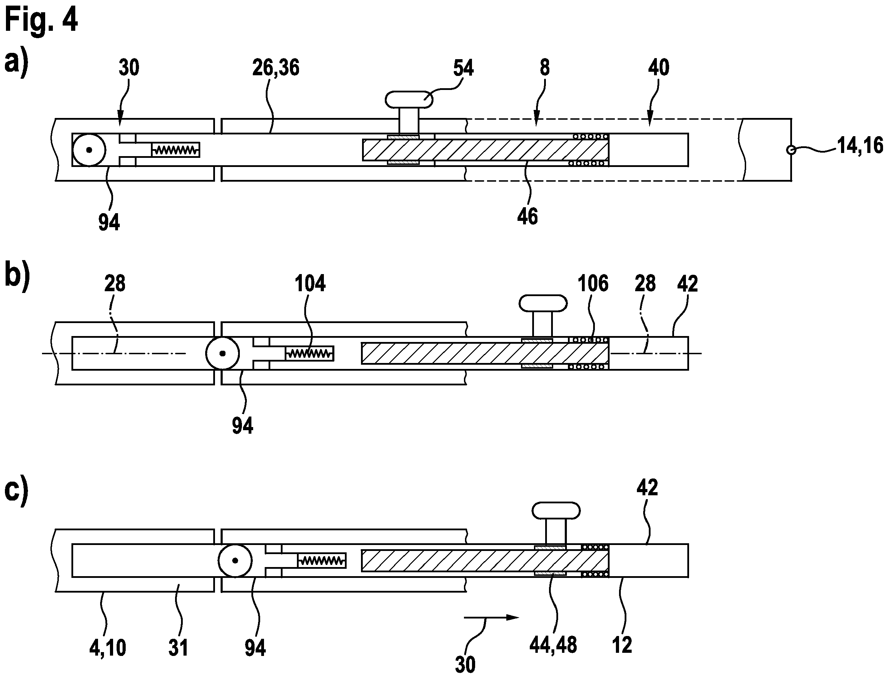

Figur 4 zeigt in einer Ansicht gemäß Figur 1 eine alternative Ausführungsform für ein Schlossmodul 18 in einer einflügeligen Tür 8, hier in einer Variante C. Das Schließelement 26 ist hier ein Zuhalteelement 94 nach Art eines in die Schlossaufnahme 31 einrastenden Kugelschnäppers, welcher federgestützt (Feder,

Kugelschnäpperfunktion) und in Richtung der Verfahrachse 28 linear verschiebbarer am Sperrelement 36 gelagert ist. Zum Verriegeln der Tür fährt das Sperrelement 36 selbst in die Schlossaufnahme 31 im Türrahmen 10 ein (Figur 4a), zum Entriegeln heraus (Figuren 4b,c).

Gemäß der Lage in Figur 4b ist der Kugelschnäpper in Funktion, d.h. das Türblatt kann durch Überwinden der Kraft der Feder 104 aus der oder in die Schließstellung SS gebracht werden. Durch Ziehen des Bedienelements 54 in Richtung des Pfeils 30 oder Betätigen des Antriebs 40 kann der Kugelschnäpper gelöst bzw. dessen Funktion neutralisiert werden (Figur 4c). Gestützt durch eine Feder 106 kehrt jedoch die Anordnung in Ihre Position nach Figur 4b zurück, so dass im stromlosen Zustand (Ausfall des Antriebs 40) der Kugelschnäpper wieder in Funktion ist und die Tür in der Schließstellung SS hält.

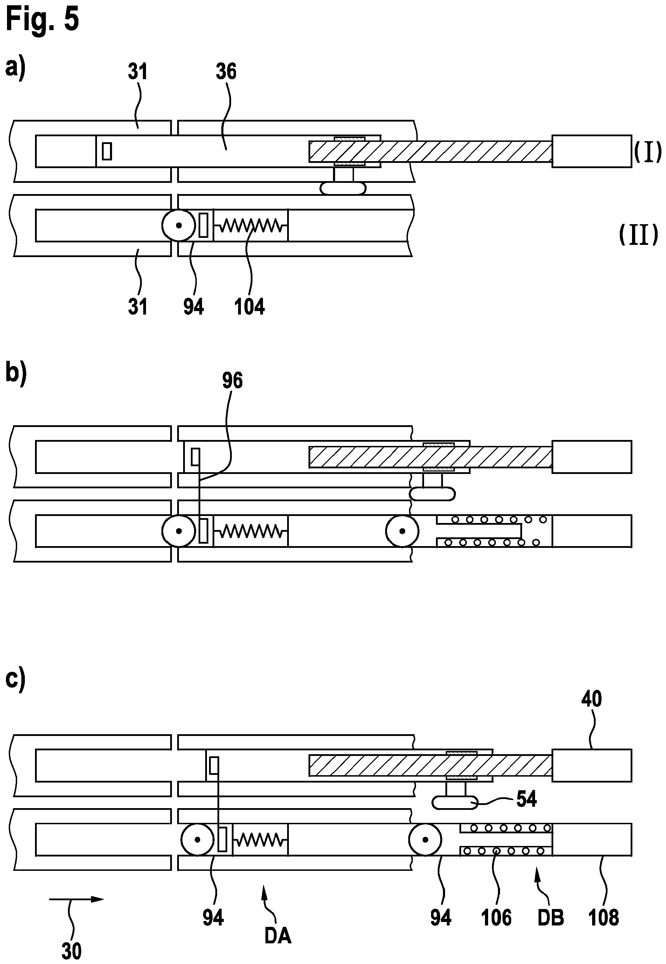

Figur 5 zeigt eine Variante D dieser Ausführungsform, hier sind in den Figuren 5a-c jeweils zwei Schnitte (I) und (II) durch die Tür 8 auf verschiedenen Höhenebenen nebeneinander dargestellt, mit anderen Worten ist das Zuhalteelement 94 tatsächlich "unterhalb" des Sperrelements 36 angeordnet. Der Kugelschnäpper ist also nicht in das Sperrelement 36 integriert. Eine hier nur symbolisch angedeuteten Kopplung vermittels eines Koppelelements 96 wirkt daher (anders als hier symbolisch dargestellt) tatsächlich in vertikaler Richtung nach unten: sobald das Sperrelement 36 aus der Schlossaufnahme 31 bewegt ist (Übergang von Figur 1a zu 1b), beginnt das Koppelelement 96 nach Art eines Mitnehmers das Zuhalteelement 94 ebenfalls aus der oder einer entsprechenden zweiten Schlossaufnahme 31 im Türrahmen 10 zurückzuziehen, sodass gemäß Figur 5c (entsprechend zu Figur 4c) ein nahezu kraftfreies Öffnen / Schließen des Türblatts 12 bezüglich der Schließstellung SS möglich ist; der Federwiderstand des Zuhalteelements 94 (Kugelschnäpperfunktionalität) muss so nicht mehr überwunden werden. Die Feder 104 ist wieder Teil der Kugelschnäpperfunktionalität. All dies entspricht einer Variante DA in Figur 5.

Bei einer Variante DB in Figur 5b und c ist das Zuhalteelement 94 alternativ ausgeführt: Hier ist ein weiterer Aktor 108 vorgesehen, hier ein Elektromagnet, der das Zuhalteelement 94 in Richtung des Pfeils 30 gegen die Feder 104 einziehen kann (Figur 5c). So kann das Koppelelement 96 entfallen und bei Bedarf das Zuhalteelement 94 unabhängig vom Antrieb 40 in seiner Schnäpperfunktionalität deaktiviert werden.

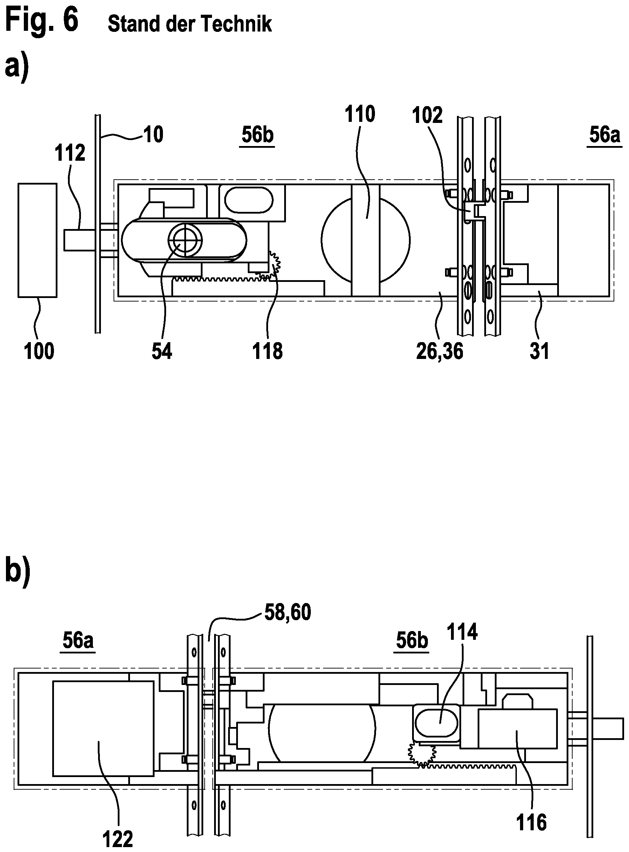

Figur 6 zeigt das aus der Praxis bekannte Schloss 24, welches in Figur 2 gestrichelt angedeutet ist, nochmals im Detail bzw. konkreter dargestellt. Figur 6a zeigt die Ansicht vom Innenraum 6, Figur 6b die Ansicht von außen. Zu erkennen ist hier insbesondere ein Drehgriff 110 zur Bedienung des Schlosses 24. Die komplexe mechanische Umsetzung / Kopplung (angedeutet bei 118) von dessen Drehbewegung führt zur Bewegung des Sperrelements 36 / Schließelements 26 in oder aus der Schlossaufnahme 31, sowie eines weiteren Bolzens 112 zum Einfahren in den Türrahmen 10 bzw. zur Bedienung des "door switch" 100. Der rein mechanische Verriegelungsschutz mit entsprechenden Bolzen 114 ist angedeutet. In Figur 6b ist eine von außen sichtbare mechanische Statusanzeige 114 für die Sperrlage PL / Freigabelage FL (door locked) sowie eine Klappe 116 zu sehen, hinter der sich der "manual override" verbirgt, um - zum Beispiel durch Kabinen Personal - die Tür 8 auch von außen entriegeln zu können. Eine Druckplatte (push plate) 122 dient zum Öffnen der Tür 8 von außen.

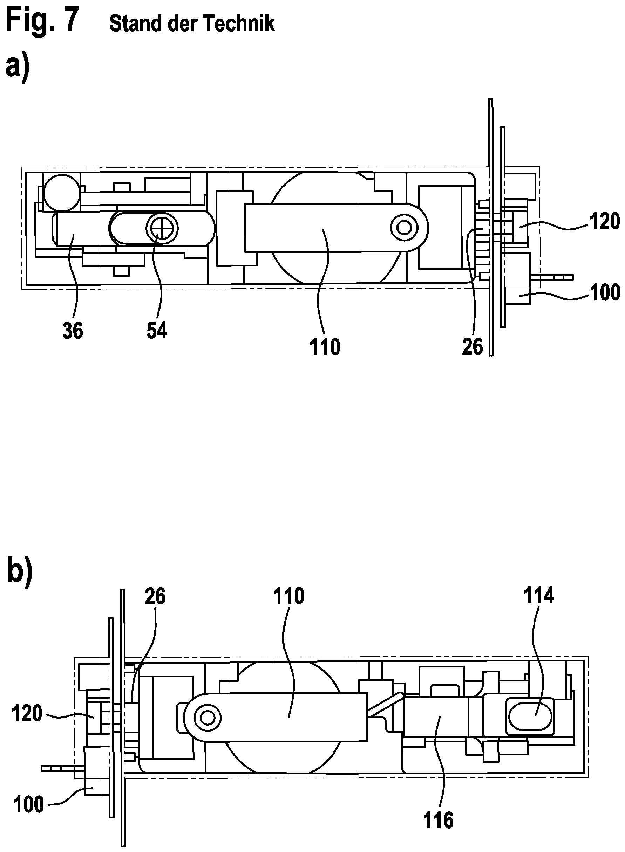

Figur 7 zeigt in einer Ansicht gemäß Figur 6 eine entsprechende Ansicht eines aus der Praxis bekannten Schlosses 24 für eine Einflügeltür. Auch hierbei handelt es sich um ein rein mechanisches Schloss, der "door switch" 100 wird hier direkt durch das Schließelement 26 betätigt, wobei dieses - hier in Form einer Schlosszunge - in nicht näher erläuterter Weise einen beweglichen Teil 120 enthält, welcher zur Betätigung des door switch 100 und so Erzeugung des "door locked" Signals dient. Der mechanische Verriegelungsschutz ist wiederum in hier nicht näher erläuterter Weise intern durch eine komplexe Mechanik im Schloss 24 realisiert. Der Drehgriff 110 in den Figuren 6 und 7 entspricht in seiner Funktionalität des Öffnens der Tür 8 aus der Schließstellung SS der Türklinke 32 aus Fig. 1.

### Bezugszeichenliste

- 2: Raum
- 4: Wandung
- 6: Innenraum
- 8: Tür
- 10: Türrahmen
- 12: Türblatt
- 14: Scharnier
- 16: Schwenkachse (Türblatt)
- 18: Schlossmodul
- 20: Modulabschnitt
- 22: Türantrieb
- 24: Schloss
- 26: Schließelement
- 28: Verfahrachse
- 30: Pfeil
- 31: Schlossaufnahme (Schließelement)
- 32: Türklinke
- 34: Drehachse (Türklinke)
- 36: Sperrelement
- 38: Aufnahme (Türklinke, Sperrelement)
- 40: Antrieb
- 42: Fixierende
- 44: Abtriebsende
- 46: Spindel
- 48: Spindelmutter
- 50: Mitnahmeelement
- 52: Gegenelement
- 54: Bedienelement, manuell
- 56a,b: Teilblatt (inneres, äußeres)
- 58: Mittelscharnier
- 60: Drehachse (Mittelscharnier)
- 62: Führungsschiene
- 64: Sperrsensor
- 66: Sperrsignal
- 68: Steuereinheit
- 70: Kabelübergang
- 72: Externsensor
- 73: Externsignal
- 74: Befehlssensor
- 75: Magnet
- 76: Türbefehl
- 78: Zusatzsensor
- 80: Türzustand
- 82: Emulations-Schnittstelle
- 84: Emulationssignal
- 86: Anzeigeelement
- 88: Zustandsinformation
- 90: Pfeil
- 92: Handgriff
- 94: Zuhalteelement
- 96: Koppelelement
- 100: door switch
- 102: Verriegelungsschutz (mechanisch)
- 104: Feder
- 106: Feder
- 108: Aktor
- 110: Drehgriff
- 112: Bolzen
- 114: Statusanzeige
- 116: Klappe
- 118: Kopplung
- 120: Teil
- 122: Druckplatte

- SS: Schließstellung
- OS: Offenstellung
- LL: Schließlage
- OL: Offenlage
- PL: Sperrlage
- FL: Freigabelage

## Patentansprüche

1. Schlossmodul (18) für eine Tür (8) für einen Raum (2) eines Flugzeugs, wobei die Tür (8) einen Türrahmen (10) und ein Türblatt (12) aufweist, das zwischen einer den Türrahmen (10) freigebenden Offenstellung (OS) und einer den Türrahmen (10) verschließenden Schließstellung (SS) bewegbar ist,
- mit einem Schloss (24), das ein mechanisches Schließelement (26) enthält, das in eine Schließlage (LL) bringbar ist, in der das Türblatt (12) in der Schließstellung (SS) gehalten ist, und das in eine Offenlage (OL) bringbar ist, in der das Türblatt (12) aus der Schließstellung (SS) bringbar ist,
- wobei das Schloss (24) ein Sperrelement (36) enthält, das in eine Sperrlage (PL) bringbar ist, in der das Schließelement (28) in der Schließlage (LL) gehalten ist und das in eine Freigabelage (FL) bringbar ist, in der das Schließelement 28) aus der Schließlage (LL) bringbar ist,
- wobei das Schloss (24) einen nicht-selbsthemmenden Antrieb (40) enthält, der wenigstens mit dem Sperrelement (36) bewegungsgekoppelt ist, um dieses zwischen der Sperrlage (PL) und der Freigabelage (FL) zu bewegen,
- mit mindestens einem Sperrsensor (64) zur Erfassung der Sperr- (PL) und Freigabelage (FL) des Sperrelements (36) in Form mindestens eines Sperrsignals (66),
- mit einer Steuereinheit (68), die signaltechnisch mit den Sperrsensoren (64) und dem Antrieb (40) verbunden ist und die dazu eingerichtet ist den Antrieb (40) zumindest auf Basis der Sperrsignale (66) der Sperrsensoren (64) anzusteuern,
- mit zumindest einem Modulabschnitt (20) des Türblatts, in dem wenigstens das Schloss (24), der Antrieb (40) und der Sperrsensor (64) baulich integriert sind.

2. Schlossmodul (18) nach Anspruch 1,
**dadurch gekennzeichnet, dass**
das Türblatt (12) mindestens zwei Teilblätter (56a,b) aufweist, die über ein jeweiliges Mittelscharnier (58) gelenkig miteinander verbunden sind, und das Schließelement (26) dazu eingerichtet ist, in der Schließlage (LL) die Teilblätter (56a,b) gegeneinander zu fixieren, so dass eine Bewegung am Mittelscharnier (58) unterbunden ist, um das Türblatt (12) in der Schließstellung (SS) zu halten.

3. Schlossmodul (18) nach Anspruch 2,
**dadurch gekennzeichnet, dass**
das Schlossmodul (18) kein zwischen wenigsten einem der Teilblätter (56a,b) und dem Türrahmen (10) wirkendes Riegelelement enthält, das dazu eingerichtet wäre, das Türblatt (12) am Türrahmen (10) in der Schließstellung (SS) zu halten.

4. Schlossmodul (18) nach einem der vorhergehenden Ansprüche,
**dadurch gekennzeichnet, dass**
das Schließelement (26) und das Sperrelement (36) identisch sind und die Sperrlage (PL) der Schließlage (LL) und die Freigabelage (FL) der Offenlage (OL) entspricht.

5. Schlossmodul (18) nach einem der vorhergehenden Ansprüche,
**dadurch gekennzeichnet, dass**
das Türblatt (12) ein Einzelblatt ist, wobei das Schließelement (26) dazu eingerichtet ist, in der Schließlage (LL) das Einzelblatt (12) in der Schließstellung (SS) gegenüber dem Türrahmen (10) zu fixieren, so dass eine Bewegung aus der Schließstellung (SS) heraus relativ zum Türrahmen (10) unterbunden ist.

6. Schlossmodul (18) nach einem der vorhergehenden Ansprüche,
**dadurch gekennzeichnet, dass**
dieses mindestens einen Externsensor (72) enthält, der dazu eingerichtet ist, einen Türzustand (80) zu erkennen und ein mit dem Türzustand (80) korreliertes Externsignal (73) auszugeben, wobei der Externsensor (72) baulich im Modulabschnitt (20) integriert ist und signaltechnisch nicht mit der Steuereinheit (68) verbunden ist.

7. Schlossmodul (18) nach einem der vorhergehenden Ansprüche,
**dadurch gekennzeichnet, dass**
dieses mindestens einen Befehlssensor (74) zur Erfassung eines mit dem Schlossmodul (18) korrelierten Türbefehls (76) und/oder mindestens einen Zusatzsensor (78) zur Erfassung eines Türzustandes (80) enthält, wobei die Befehlssensoren (74) und die Zusatzsensoren (78) mit der Steuereinheit (68) signaltechnisch verbundenen sind und baulich in den Modulabschnitt (20) integriert sind.

8. Schlossmodul (18) nach Anspruch 7,
**dadurch gekennzeichnet, dass**
das Sperrelement (36) und/oder das Schließelement (26) ein manuelles Bedienelement (54) zur manuellen Änderung von dessen Lage (LL,OL,PL,FL) aufweist und der Befehlssensor (74) in unmittelbarer Umgebung des Bedienelements (54) angeordnet ist.

9. Schlossmodul (18) nach einem der vorhergehenden Ansprüche,
**dadurch gekennzeichnet, dass**
dieses mindestens ein Anzeigeelement (86) zur Anzeige einer mit dem Schlossmodul (18) korrelierten Zustandsinformation (88) enthält, wobei das Anzeigeelement (86) baulich in den Modulabschnitt (20) integriert ist und mit der Steuereinheit (68) signaltechnisch verbunden ist.

10. Schlossmodul (18) nach einem der vorhergehenden Ansprüche,
**dadurch gekennzeichnet, dass**
der Antrieb (40) auch mit dem Schließelement (26) bewegungsgekoppelt ist, um dieses zumindest aus der Schließlage (LS) in die Offenlage (OL) zu bewegen.

11. Schlossmodul (18) nach einem der vorhergehenden Ansprüche,
**dadurch gekennzeichnet, dass**
die Steuereinheit (68) mindestens eine Emulations-Schnittstelle (82) zum Flugzeug aufweist und dazu eingerichtet ist, an dieser ein flugzeugspezifisches, mit der Tür (8) korreliertes Emulationssignal (84) bereitzustellen, das auf Basis der in der Steuereinheit (68) verfügbaren Daten erzeugt ist.

12. Tür (8) für einen Raum (2) eines Flugzeugs, wobei die Tür (8) einen Türrahmen (10) und ein Türblatt (12) aufweist, wobei die Tür (8) das Schlossmodul (18) nach einem der vorhergehenden Ansprüche aufweist und das Türblatt (12) den Modulabschnitt (20) enthält.

13. Tür (8) nach Anspruch 12,
**dadurch gekennzeichnet, dass**
diese einen Türantrieb (22) enthält, der dazu eingerichtet ist, das Türblatt (12) zwischen der Offenstellung (OS) und der Schließstellung (SS) zu bewegen.

14. Raum (2) eines Flugzeuges, mit einer einen Innenraum (6) des Raumes (2) umgrenzenden Wandung, (4) wobei die Wandung (4) mindestens eine Tür (8) nach einem der Ansprüche 12 bis 13 enthält.

15. Raum (2) nach Anspruch 14,
**dadurch gekennzeichnet, dass**
der Raum (2) ein Waschraum eines Flugzeuges ist.
